(19) Europäisches Patentamt
European Patent Office
Office européen des brevets

(11) EP 2 368 966 B1

(12) # EUROPÄISCHE PATENTSCHRIFT

(45) Veröffentlichungstag und Bekanntmachung des Hinweises auf die Patenterteilung:
**15.05.2013 Patentblatt 2013/20**

(51) Int Cl.:
***C09K 19/20*** *(2006.01)* ***C09K 19/42*** *(2006.01)*
***C09K 19/46*** *(2006.01)* ***C09K 19/02*** *(2006.01)*

(21) Anmeldenummer: **11001822.3**

(22) Anmeldetag: **04.03.2011**

(54) **Flüssigkristalline Verbindungen und flüssigkristalline Medien**

Liquid crystalline compounds and liquid crystalline media

Composés à base de cristaux liquides et milieux cristallins liquides

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.03.2010 DE 102010012329**

(43) Veröffentlichungstag der Anmeldung:
**28.09.2011 Patentblatt 2011/39**

(73) Patentinhaber: **Merck Patent GmbH**
**64293 Darmstadt (DE)**

(72) Erfinder:
- **Jansen, Axel Dr.**
  **64293 Darmstadt (DE)**
- **Haensel, Helmut Dr.**
  **64367 Muehltal (DE)**
- **Krattiger, Philipp Dr.**
  **64291 Darmstadt (DE)**
- **Taugerbeck, Andreas Dr.**
  **64285 Darmstadt (DE)**
- **Rillich, Malgorzata**
  **64291 Darmstadt (DE)**

(56) Entgegenhaltungen:
**EP-A1- 1 900 792** **EP-A1- 1 908 811**
**WO-A1-2005/017067** **DE-A1-102008 024 866**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 368 966 B1

Printed by Jouve, 75001 PARIS (FR)

**Beschreibung**

Die vorliegende Erfindung betrifft flüssigkristalline Verbindungen mit mindestens drei fluorsubstituierten Benzolringen, einer terminalen Trifluormethylgruppe und mindestens einer $-CF_2O-$ Brücke. Die Erfindung betrifft außerdem damit hergestellte flüssigkristalline Medien und diese Medien enthaltende Flüssigkristall-Anzeigevorrichtungen (LC-Displays).

Flüssigkristalline Medien werden seit längerem in LC-Displays genutzt, um Informationen anzuzeigen. Hochpolare Verbindungen mit 4 Ringen und einer $-CF_2O-$ Brücke werden schon für Anzeigevorrichtungen vorgeschlagen, z.B. in den Druckschriften DE 10353658 A1 und EP 1454975 A2. In der Druckschrift US 2009/0059157 A1 werden LC-Displays, die in der optisch isotropen blauen Phase arbeiten, offenbart.

Neben den dem Fachmann gut bekannten Displays mit nematischen Flüssigkristallen werden auch zunehmend Anwendungen entwickelt, die auf Medien mit einer blaue Phase basieren. Diese zeichnen sich durch besonders niedrige Schaltzeiten aus. Bei Displayanwendungen, bei denen elektrooptische Effekte der flüssigkristallinen blauen Phasen genutzt werden, sind insbesondere die Parameter $\Delta\varepsilon$ und $\Delta n$ von entscheidender Bedeutung.

Grundlage für schnelle Schaltvorgänge in diesen Phasen ist der sog. Kerr-Effekt. Der Kerr-Effekt ist die Änderung der Doppelbrechung eines optisch transparenten und isotropen Materials hervorgerufen durch ein äußeres elektrisches Feld. Die Änderung der Doppelbrechung wird durch folgende Gleichung wiedergegeben.

$$\Delta n_{induziert} = \lambda \cdot K \cdot E^2$$

Dabei ist $\Delta n_{\text{induziert}}$ die induzierte Doppelbrechung, K ist die Kerr-Konstante und E das angelegte elektrische Feld. $\lambda$ steht für die Wellenlänge. Außergewöhnlich hohe Kerr-Konstanten werden für Materialien in der blauen Phase beobachtet.

*Kikuchi* et al. beschreiben die Abhängigkeit der Kerr-Konstante von den LC-Materialeigenschaften [H. Kikuchi et al., Appl. Phys. Lett. 2008, 92, 043119.]. Danach ist die Kerr-Konstante proportional zum Produkt aus Doppelbrechung und dielektrischer Anisotropie des flüssigkristallinen Mediums.

$$K \sim \Delta n \cdot \Delta\varepsilon$$

Für schnelle Schaltprozesse und geringe Schaltspannungen werden Materialien mit hohen Werten für die Kerr-Konstante und somit hohen Werten für das Produkt $\Delta n \cdot \Delta\varepsilon$ benötigt.

In der WO 2008/061606 werden neben polymerisierbaren Cyclohexanderivaten für die Verwendung zur Stabilisierung von blauen Phasen auch eine Vielzahl verschiedener LC-Komponenten offenbart, darunter auch eine $CF_3$-terminierte Verbindung der folgenden Formel

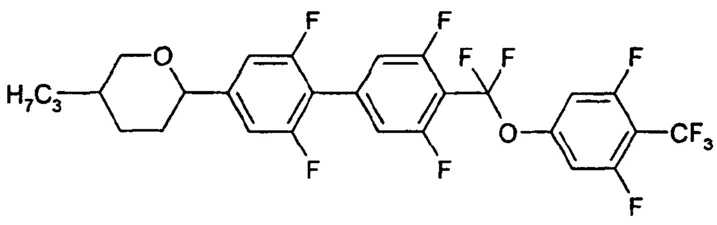

Der Benzolring neben dem Tetrahydropyranring ist dabei ausschließlich mit zwei Fluoratomen substituiert.

In der Druckschrift US 2006/0061699 A1 (vgl. DE 10353685 A1) werden Verbindungen mit 4 Ringen und einer $-CF_2O-$ Brücke offenbart, darunter beispielsweise die beiden F-terminierten Verbindungen der Formel

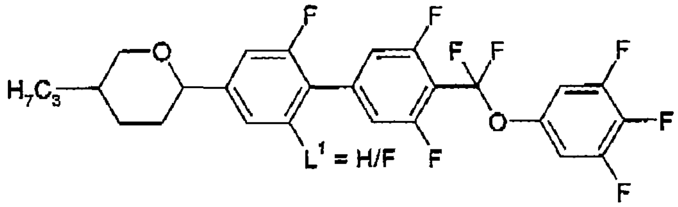

Aus den Daten der Verbindungen geht hervor, dass das Produkt $\Delta n \cdot \Delta \varepsilon$ für die Verbindung mit $L^1$ = H kleiner ist, als für die Verbindung mit $L^1$ = F (4,0 gegenüber 4,3).

In der Druckschrift EP 1454975 A2 werden Verbindungen mit 4 Ringen und einer $-CF_2O-$ Brücke offenbart, darunter beispielsweise die beiden $OCF_3$-terrninierten Verbindungen der Formel

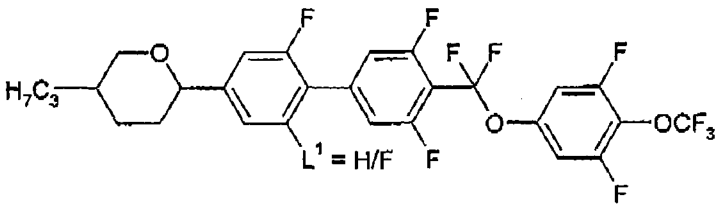

Aus den Daten der Verbindungen geht wiederum hervor, dass das Produkt $\Delta n \cdot \Delta \varepsilon$ für die Verbindung mit $L^1$ = H kleiner ist als für die Verbindung mit $L^1$ = F (3,5 gegenüber 3,7).

Die Druckschriften WO 2005/017067 A1, EP 1900792 A1, EP 1908811 A1 und DE 102008024866 A1 offenbaren weitere Strukturformeln von Verbindungen mit vier Ringen und einer $CF_2O$-Brücke. Die Verbindungen unterscheiden sich von den erfindungsgemäßen Strukturen in der Art der Substitution an den Ringen bzw. in der WO 2005/017067 A1 durch das Vorhandensein eines Cyclohexanrings.

Eine Aufgabe der vorliegenden Erfindung ist es, Verbindungen mit vorteilhaften Eigenschaften für den Einsatz in flüssigkristallinen Medien zur Verfügung zu stellen. Insbesondere sollen Sie für den Einsatz in Displays geeignet sein, die Medien mit polymerstabilisierten blauen Phasen verwenden. Hier werden Materialien benötigt, die ein schnelles Schalten ermöglichen, eine gute 'Voltage-holding-ratio' (VHR) aufweisen, geringe Spannungen für den Schaltprozess ($V_{op}$) benötigen, hohe Klärpunkte besitzen, eine geringe Hysterese zeigen, einen geringen Memory-Effekt aufweisen und stabil gegenüber Belastungen durch Licht- und Temperatur sind. Darüber hinaus sollten die Einzelverbindungen über eine ausreichende Löslichkeit in nematischen FK-Medien verfügen, bzw. selbst einen breiten nematischen Phasenbereich aufweisen.

Diese Aufgabe wird erfindungsgemäß gelöst durch Verbindungen der allgemeinen Formel I. Überraschenderweise wird auch gefunden, dass mit den erfindungsgemäßen Verbindungen flüssigkristalline Medien mit einem geeigneten, nematischen Phasenbereich, hoher dielektrischer Anisotropie $\Delta\varepsilon$ und hohem An verwirklicht werden können, welche die Nachteile der Materialien des Standes der Technik nicht oder zumindest nur in erheblich geringerem Maße aufweisen. In weiten Teilen gleiche Anforderungen werden an hochpolare Substanzen für rein nematische Displays gestellt.

Die Erfindung betrifft Verbindungen der Formel I,

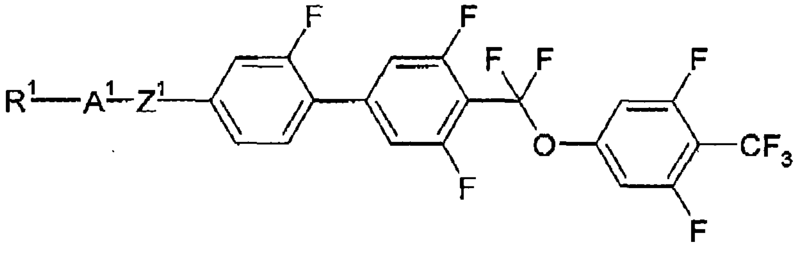

I

worin

$A^1$ 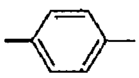, 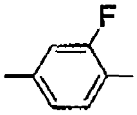, 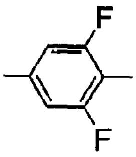, 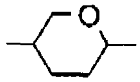,

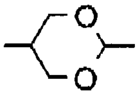, 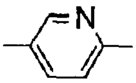, 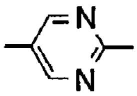, 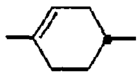,

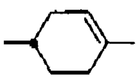, 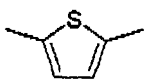 oder 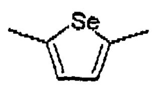,

$Z^1$ eine Einfachbindung, $CF_2O$, $CH_2CH_2$, $CF_2CH_2$, $CF_2CF_2$, CFHCFH, $CFHCH_2$, (CO)O, $CH_2O$, C≡C, CH=CH, CF=CH, CF=CF; wobei unsymmetrische Bindeglieder (z.B. $CF_2O$) in beide möglichen Richtungen orientiert sein können, und

$R^1$ einen unsubstituierten Alkylrest mit 1 bis 15 C-Atomen, wobei in diesem Rest auch eine oder mehrere $CH_2$-Gruppen jeweils unabhängig voneinander durch -C≡C-, -CH=CH-, -CF=CF-, -CF=CH-, -CH=$C_F$-, -(CO)O-, -O(CO)-, -(CO)- oder -O- so ersetzt sein können, dass O-Atome nicht direkt miteinander verknüpft sind, H, F, Cl, Br, CN, $CF_3$, $OCF_3$, SCN, NCS oder $SF_5$,

bedeuten.

Die erfindungsgemäßen Verbindungen besitzen einen relativ hohen Klärpunkt, eine außergewöhnlich hohe dielektrische Anisotropie (Δε), eine hohe optische Anisotropie (Δn), sowie eine geringe Rotationsviskosität. Sie besitzen, allein oder in Mischung mit weiteren mesogenen Komponenten, über einen breiten Temperaturbereich eine nematische Phase. Diese Eigenschaften machen sie geeignet für die Verwendung in flüssigkristallinen Medien. Besonders geeignet sind sie für die Anwendung in Medien im Bereich der blauen Phase.

Der Rest $R^1$ bedeutet bevorzugt einen Alkylrest mit 1 bis 15 C-Atomen, wobei in diesem Rest auch eine oder mehrere $CH_2$-Gruppen jeweils unabhängig voneinander durch -C≡C-, -CH=CH-, -(CO)O-, -O(CO)-, -(CO)-oder -O- so ersetzt sein können, dass O-Atome nicht direkt miteinander verknüpft sind. Besonders bevorzugt bedeutet $R^1$ ein unsubstituiertes Alkyl, und ganz besonders bevorzugt ein geradkettiges Alkyl mit 1 bis 12 C-Atomen.

Die Brückengruppe $Z^1$ bedeutet vorzugsweise eine Einfachbindung.

Der Ring $A^1$ bedeutet bevorzugt eine Gruppe ausgewählt aus den Resten

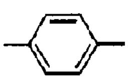, 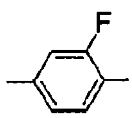, 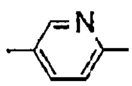 oder 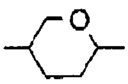.

Beispielhafte bevorzugte Ausführungsformen der Erfindung sind daher unter anderem die folgenden Strukturen:

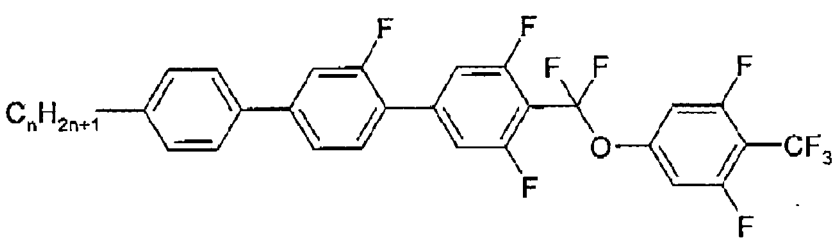

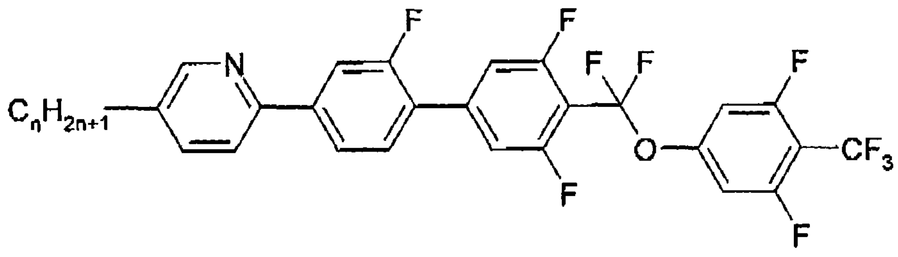

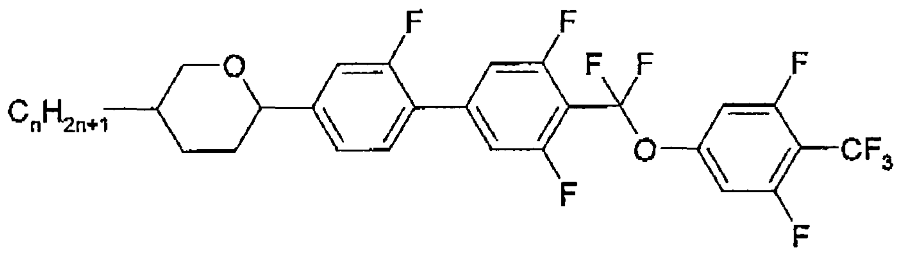

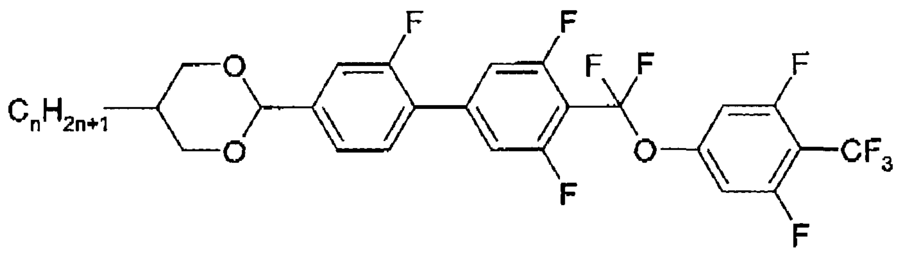

worin n = 1, 2, 3, 4, 5, 6 oder 7, insbesondere 3, ist.

Die Verbindungen der Formel I können vorteilhaft wie an der folgenden beispielhaften Synthese ersichtlich hergestellt werden (Schema 1):

Besonders bevorzugt werden die Verbindungen der Formel I durch eine Palladium-vermittelte Kreuzkupplungsreaktion der Bausteine **2** mit Boronsäuren **1** bzw. Boronsäureestem wie z.B. **3** hergestellt (*Suzuki*-Kupplung, vgl. **Schema 1**).

**Schema 1: Synthese der Verbindungen I mit den Bausteinen 2**

*Methode A*: Verwendung von Boronsäuren **1**

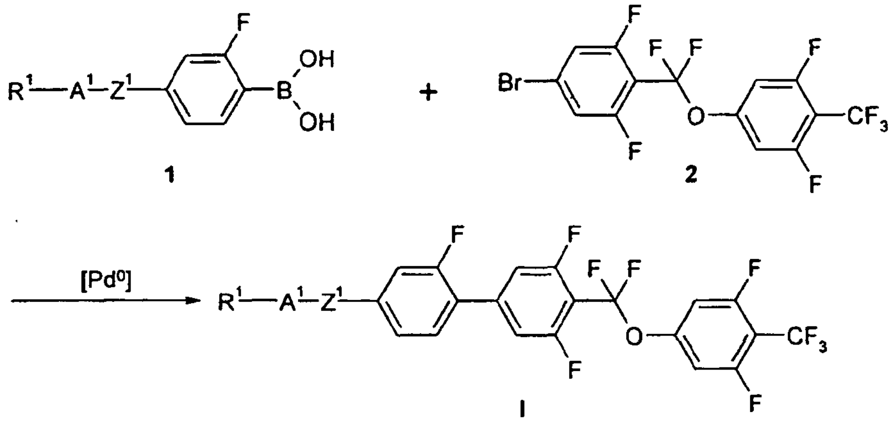


**1** **2** **I**

*Methode B*:

Verwendung von Boronsäureestern, z.B. Pinakolboronsäureestern **3**

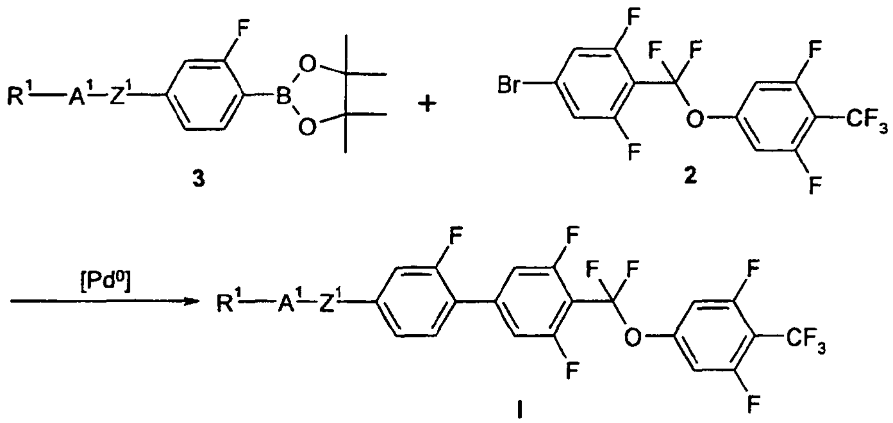


**3** **2** **I**

Die Rollen von Elektrophil und Nucleophil können auch vertauscht werden. Dann sind die Boronsäuren **6** oder Boronsäureester wie z.B. der Pinakolboronsäureester **5** bevorzugte Ausgangsverbindungen (Schema 2).

Diese werden mit entsprechenden Elektrophilen **4** umgesetzt, X ist dabei bevorzugt Br, I oder Triflat (OTf).

**Schema 2: Synthese der Verbindungen I mit den Bausteinen 4 bzw. 5**

*Methode C*:

Verwendung von Boronsäureestern, z.B. Pinakolboronsäureester **5**

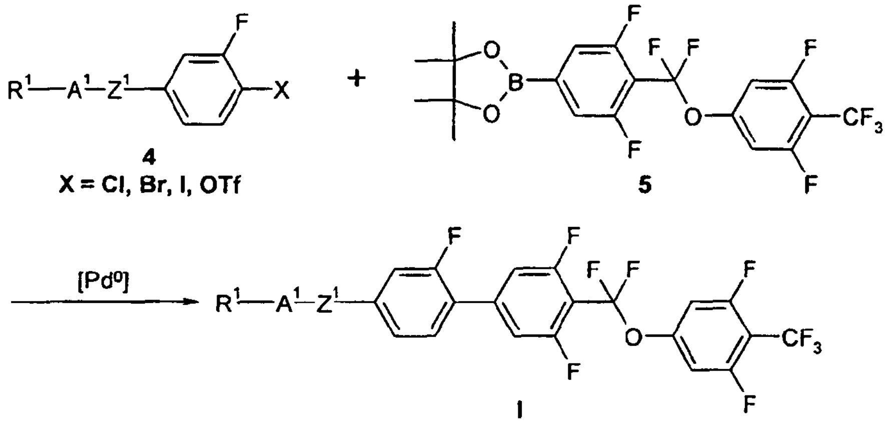


**4**
**X = Cl, Br, I, OTf**
**5**
**I**

*Methode D*: Verwendung der Boronsäure **6**

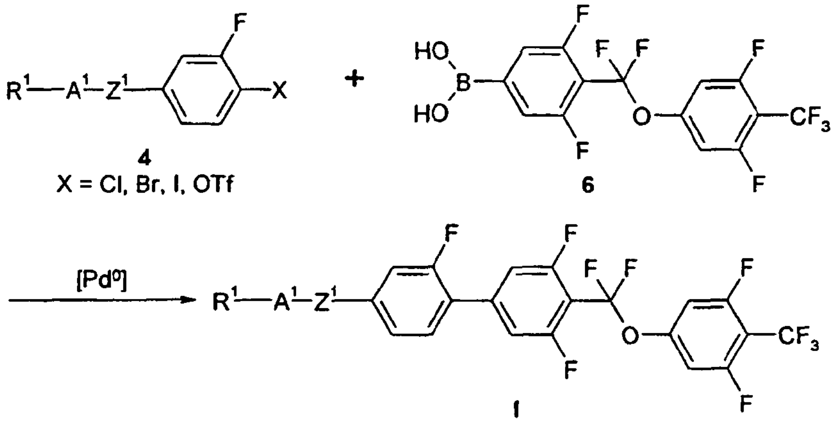


**4**
X = Cl, Br, I, OTf
**6**
**I**

Die benötigten Ausgangsmaterialien können in Analogie zu Verfahren, die dem Fachmann bekannten und in Standardwerken der organischen Chemie beschrieben sind, wie beispielsweise in Houben-Weyl, Methoden der organischen Chemie, Thieme-Verlag, Stuttgart, hergestellt werden.

Die Verbindung **2** wird, wie in **Schema 3** dargestellt, ausgehend von 3,5-Difluor-4-trifluormethylphenol (**8**) synthetisiert. Das Phenol wird in Gegenwart von Base mit dem Dithianyliumsalz **7** umgesetzt, und das Addukt wird direkt einer oxidativen Desulfurierung unterzogen [P. Kirsch, M. Bremer, A. Taugerbeck, T. Wallmichrath, Angew. Chem. Int. Ed. 2001, 40, 1480-1484].

## Schema 3: Synthese der Verbindung 2

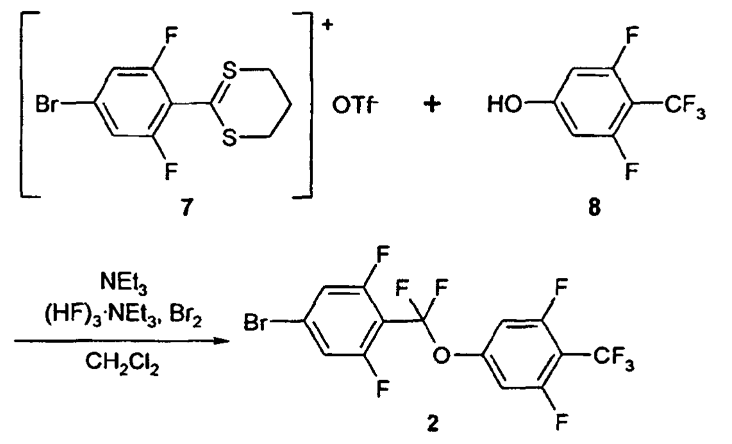


7 + 8 → 2

Der Boronsäureester **5** wird dann ausgehend von **2** über eine Palladiumkatalysierte Borylierung mit Pinakolboranen, z.B. Bis(pinakolat)dibor ($Pin_2B_2$) erhalten. Die Boronsäure **6** wird durch Umsetzung der aus **2** erhaltenen Organolithiumverbindung mit Trimethylborat und anschließender Hydrolyse erhalten (**Schema 4**).

## Schema 4: Synthese der Verbindungen 5 und 6

Palladium-katalysierte Borylierung

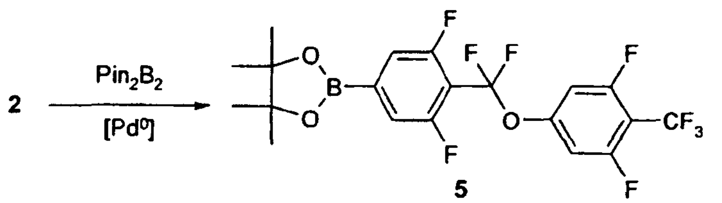


2 → 5

Synthese der Boronsäure 6 mit Trimethylborat

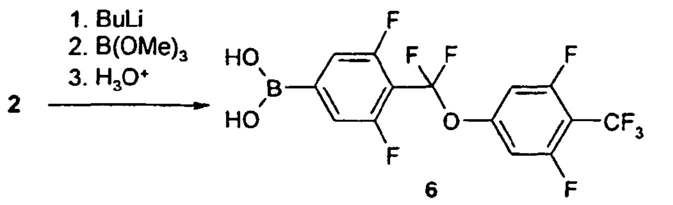


2 → 6

Ist $A^1$ ein Cyclohexanring (hier nicht beansprucht) und $Z^1$ eine Einfachbindung, dann wird bevorzugt *Methode A* (vgl. **Schema 1**) verwendet, da die entsprechenden Boronsäuren **13** einfach zugänglich sind (**Schema 5**). Das aus 3-Fluor-bromphenol (**9**) erhaltene Grignard-Reagenz wird an Ketone **10** addiert. Die Alkohole **11** werden unter Wasserabspaltung in die Alkene überführt, diese werden dann hydriert. Eine Isomerisierung liefert dann bevorzugt die *trans*-Isomere der Verbindungen **12**. Eine *ortho*-Metallierung an der gewünschten Position gelingt mit einer geeigneten Lithium-Base. Die metallorganische Verbindung wird mit Trimethylborat umgesetzt und die Boronsäuren **13** werden nach der Aufarbeitung mit Säure erhalten.

Die *Suzuki*-Kupplung der Komponenten **13 und 2** verläuft dann, z.B. unter den in **Schema 5** beschriebenen Bedingungen in hervorragenden Ausbeuten.

**Schema 5:** Synthese der Verbindungen **Ib** in denen $A^1$ ein Cyclohexanring und $Z^1$ eine Einfachbindung ist

Synthese der Boronsäuren **13**

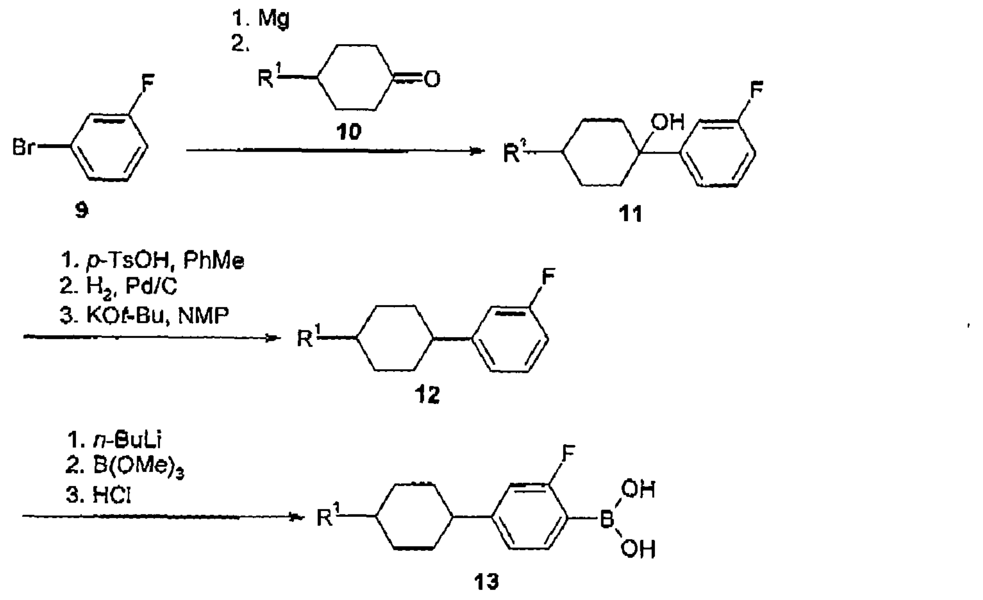


*Suzuki*-Kupplung

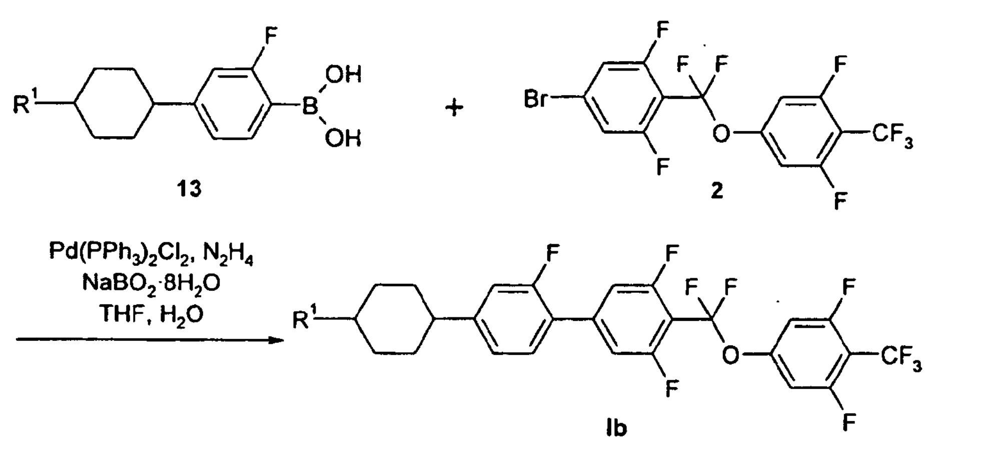


Für Verbindungen in denen $A^1$ einen Tetrahydropyranring darstellt ist dies kein bevorzugtes Verfahren, da bei einer analogen Reaktionsführung Mischungen regioisomerer Boronsäuren erhalten werden (vgl. **Schema 6**). Eine Trennung von **15** und **16** ist nicht ohne Weiteres möglich.

**Schema 6:** Bildung eines Regioisomerengemisches bei der Synthese der Boronsäure **15**

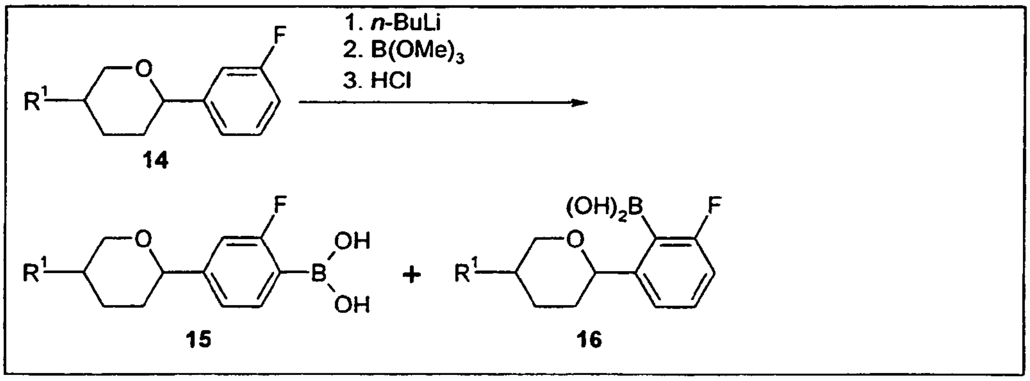


**14**, **15**, **16**

Daher ist es auch ein Aspekt dieser Erfindung Verfahren zur Verfügung zu stellen, um die bevorzugten Verbindungen Ia (= I mit $A^1$ = Tetrahydropyran und $Z^1$ = Einfachbindung) in guten Ausbeuten und einer ausgezeichneten Reinheit synthetisieren zu können. Diese Aufgabe wird durch die Entwicklung zweier Verfahren (vgl. **Schemata 7 und 8** bzw. **Schemata 9 und 10**) gelöst.

Ein erstes Verfahren ist angelehnt an die Methode B aus **Schema 1.** Hierbei wird der Boronsäureester **17** in einer Suzuki-Kupplung mit der Verbindung **2** zu den Verbindungen **Ia** umgesetzt (**Schema 7**).

**Schema 7:** Synthese der Verbindungen **Ia**

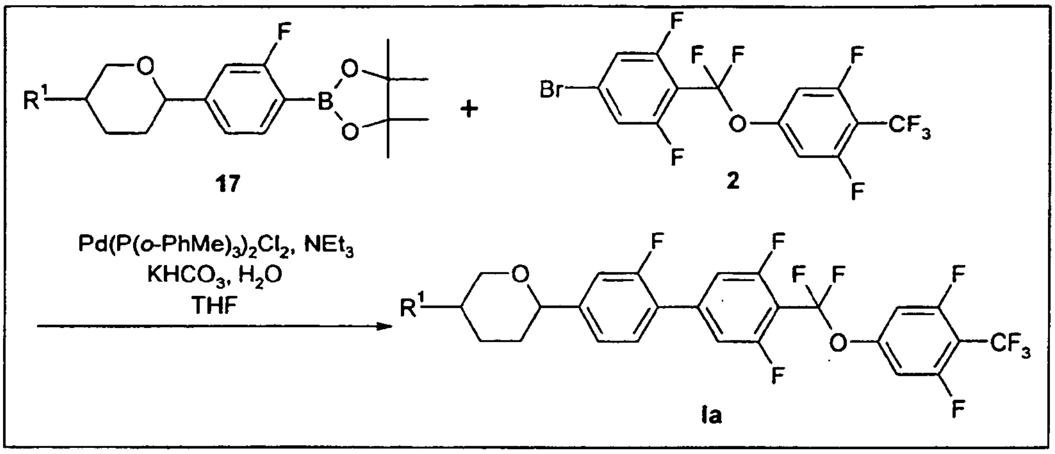


**17**, **2**, **Ia**

Der dazu benötigte Boronsäureester **17** wird ausgehend von 4-Brom-3-fluorbenzaldehyd (**18**) synthetisiert. Dieser wird zunächst in einer *Prins*artigen Cyclisierung mit den Allylalkoholen **19** zu den Bromtetrahydropyranen **20** umgesetzt. Diese werden mit $Pin_2B_2$ unter Palladiumkatalyse zu den Boronsäureestern **21** umgesetzt. Abschließend erfolgt eine Debromierung zu den Verbindungen **17** unter reduktiven Bedingungen.

**Schema 8: Synthese des Boronsäureester 17**

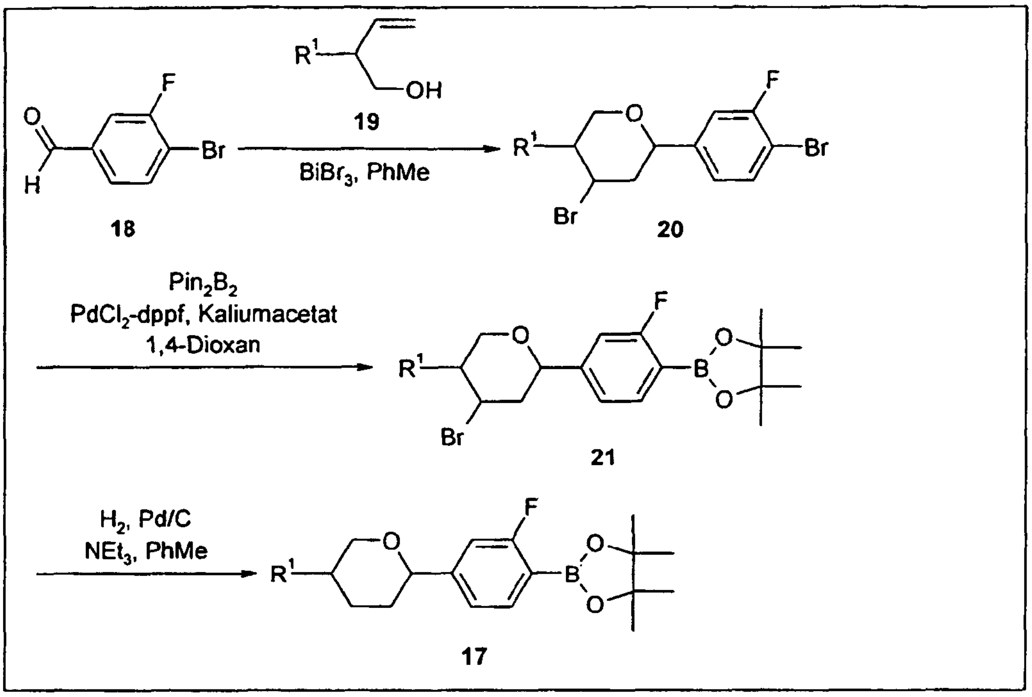


Ein zweites Verfahren ist angelehnt an die *Methode C* aus **Schema 2**. Hier werden die Triflate **22** als Ausgangsmaterialien verwendet und mit dem Boronsäureester **5** in einer *Suzuki-Kupplung* zu den Verbindungen **Ia** umgesetzt (**Schema 9**).

**Schema 9: Synthese der Verbindungen Ia**

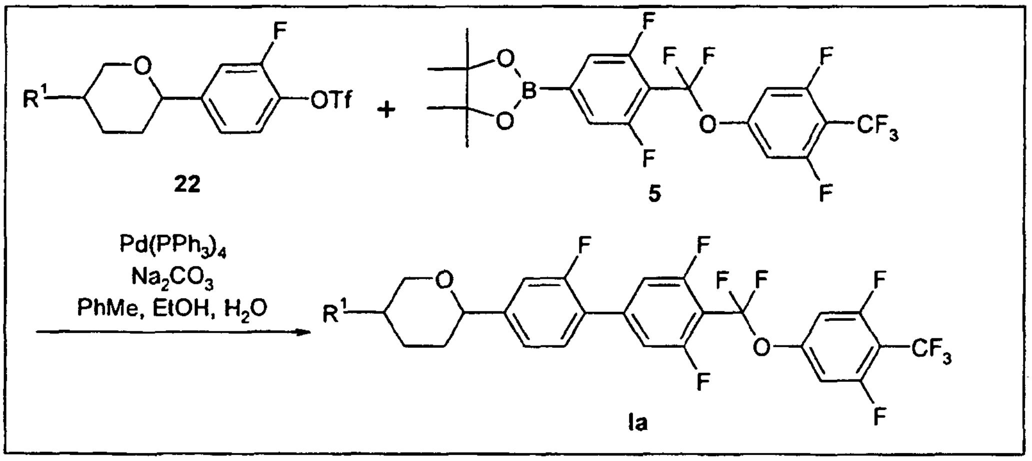


Die Triflate **22** werden folgendermaßen, ausgehend von 4-Brom-2-fluorphenol (**23**) synthetisiert. Zunächst wird die Hydroxyfunktion, unter

Erhalt des Benzylethers **24** mit Benzylbromid geschützt. Das aus **24** gebildete Grignardreagenz wird mit N-Formylmorpholin oder DMF formyliert. Über die Prins-artige Cyclisierung des Aldehyds **25** mit Allylalkoholen **19** wird der Tetrahydropyranring aufgebaut. Auf dieser Stufe gelingt vorteilhaft die Abtrennung der unerwünschten cis-Isomere der Verbindungen **26** (bzgl. der 1,4-Positionen des Tetrahydropyranrings). Die Debromierung unter reduktiven Bedingungen geht einher mit der Entfernung der Benzylschutzgruppe, unter Bildung der Phenole **27.** Umsetzung der Verbindungen **27** mit Trifluormethansulfonsäureanhydrid ($Tf_2O$) liefert die gewünschten Triflate **22.**

**Schema 10: Synthese der Triflate 22**

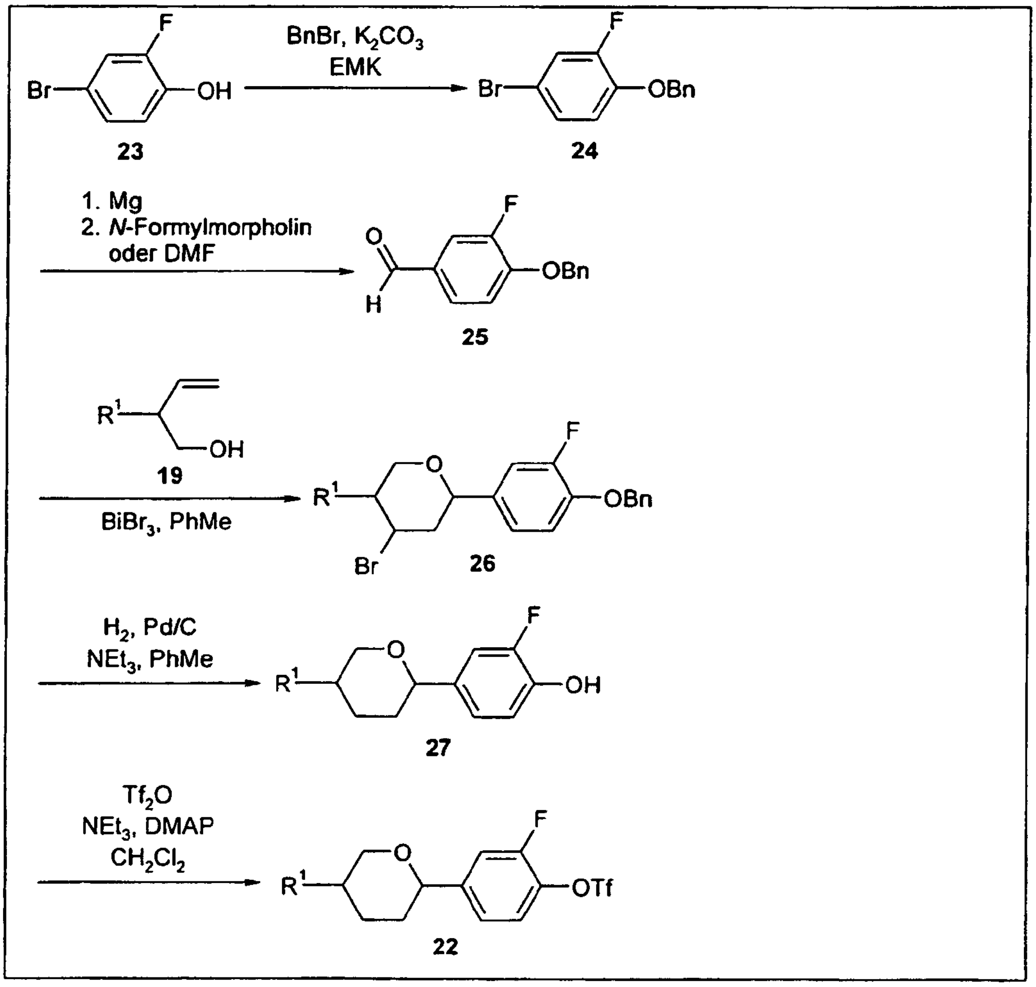


Die Erfindung umfasst daher auch ein Verfahren zur Herstellung von Verbindungen der Formel I, das einen Reaktionsschritt umfasst, worin zwei Edukte der Formeln A und B:

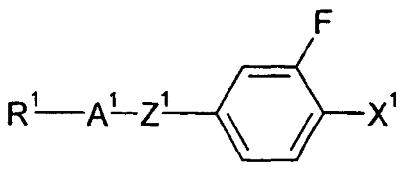

A

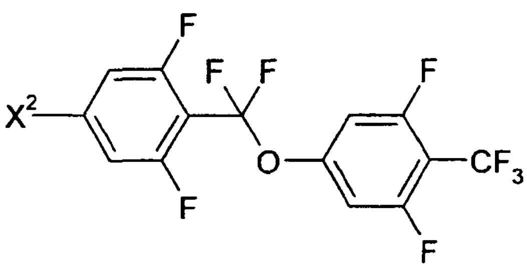

B

worin $R^1$, $A^1$ und $Z^1$ wie für Formel I definiert sind, und

$X^1$ oder $X^2$ -$B(OH)_2$, einen Boronsäureester oder ein Boronatsalz
und der andere Rest Cl, Br, I oder -$O(SO_2)CF_3$ bedeuten,
in Gegenwart eines geeigneten Übergangsmetallkatalysators umgesetzt werden.

Das Verfahren ist besonders vorteilhaft für Verbindungen der Formel I, worin

$A^1$

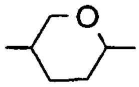 ,

$Z^1$ eine Einfachbindung,
$X^1$ ein Rest, der ein Boratom umfasst, bevorzugt eine Boronsäureestergruppe und
$X^2$ ein Halogen oder eine für das Verfahren geeignete Gruppe
bedeuten.

Dabei wird die Borverbindung A bevorzugt analog Schema 8 hergestellt, d.h. die Verbindung A oder ihre Vorstufe wird aus einer Verbindung mit $X^1$ = Br unter Palladiumkatalyse in Gegenwart einer geeigneten Borverbindung hergestellt.

Die flüssigkristallinen Medien gemäß der vorliegenden Erfindung enthalten eine oder mehrere Verbindungen der Formel I und optional mindestens eine weitere, vorzugsweise mesogene Verbindung. Das Flüssigkristallmedium enthält daher bevorzugt zwei oder mehr Verbindungen. Bevorzugte Medien umfassen die bevorzugten Verbindungen der Formel I.

Die erfindungsgemäßen flüssigkristallinen Medien besitzen vorzugsweise eine positive dielektrische Anisotropie. Sie lassen sich so konzipieren, dass sie eine sehr hohe dielektrische Anisotropie kombiniert mit hohen optischen Anisotropien besitzen.

Bevorzugte weitere Verbindungen für die flüssigkristallinen Medien gemäß der Erfindung sind ausgewählt aus den Verbindungen der Formel II und III:

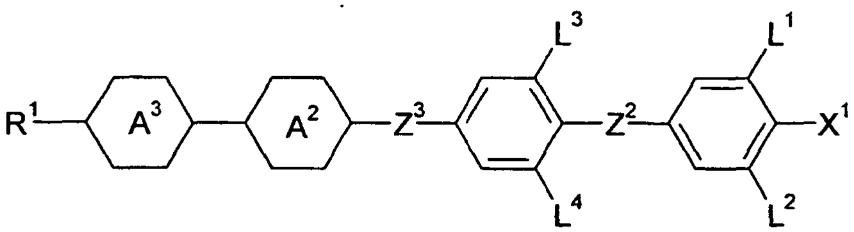

II

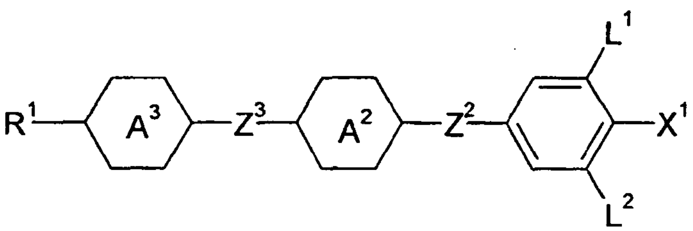

III

worin

$R^1$ jeweils unabhängig voneinander einen unsubstituierten Alkylrest mit 1 bis 15 C-Atomen, wobei in diesem Rest auch eine oder mehrere $CH_2$-Gruppen jeweils unabhängig voneinander durch -C≡C-, -CH=CH-, -CF=CF-, -CF=CH-, -CH=CF-, -(CO)O-, -O(CO)-, -(CO)- oder -O- so ersetzt sein können, dass O-Atome nicht direkt miteinander verknüpft sind, bevorzugt einen geradkettigen Alkylrest mit 2 bis 7 C-Atomen,

$A^2$, $A^3$ unabhängig voneinander

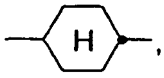, 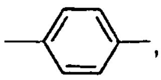, 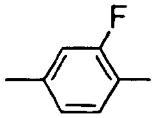, 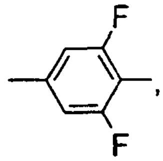,

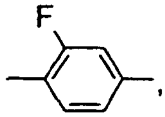, 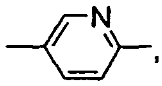, 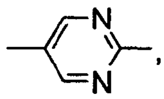, 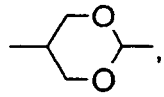,

$Z^2$, $Z^3$ unabhängig voneinander eine Einfachbindung, $CF_2O$, $CH_2CH_2$, $CF_2CH_2$, $CF_2CF_2$, CFHCFH, $CFHCH_2$, (CO)O, $CH_2O$, C=C, CH=CH, CF=CH, CF=CF; wobei unsymmetrische Bindeglieder (z.B. $CF_2O$) in beide möglichen Richtungen orientiert sein können,

$X^1$ F, Cl, CN, oder Alkyl, Alkenyl, Alkenyloxy, Alkylalkoxy oder Alkoxy mit 1 bis 3 C-Atomen, welches durch F ein- oder mehrfach substituiert ist, und

$L^1$ bis $L^4$ bedeuten. H oder F,

Bevorzugt enthalten die flüssigkristallinen Medien zwischen 10 und 50 Gew.-% an Verbindungen der Formel I. Bei mehr als 10 % Gesamtgehalt werden bevorzugt zwei oder mehr Verbindungen der Formel I mit unterschiedlichen Kettenlängen im Rest $R^1$ und gegebenenfalls mit unterschiedlichen Ringen $A^1$ eingesetzt.

Bevorzugt enthalten die flüssigkristallinen Medien zwischen 20 und 40 Gew.-% an Verbindungen der Formel II. Die Verbindungen der Formel III werden bevorzugt, sofern vorhanden, mit bis zu 20 Gew.-% eingesetzt. Die restlichen sonstigen Verbindungen, sofern vorhanden, sind ausgewählt aus weiteren Verbindungen mit hoher dielektrischer Anisotropie, hoher optischer Anisotropie und vorzugsweise mit hohem Klärpunkt.

Überproportional hohe dielektrische Anisotropien lassen sich durch einen hohen Anteil an den Verbindungen der Formel I erreichen, vorzugsweise ergänzt durch Verbindungen der Formeln II und III.

Bevorzugte Verbindungen der Formel II sind solche der Formel IIa:

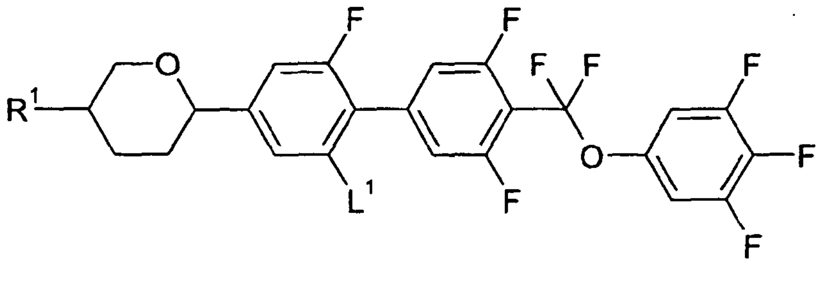

IIa

worin $R^1$ und $L^1$ wie für Formel II definiert sind.

Bevorzugte Verbindungen der Formel III sind solche der Formel IIIa oder IIIb:

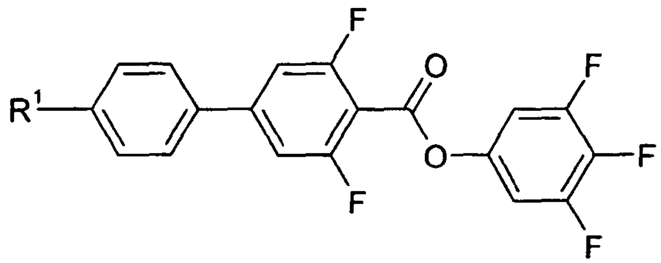

IIIa

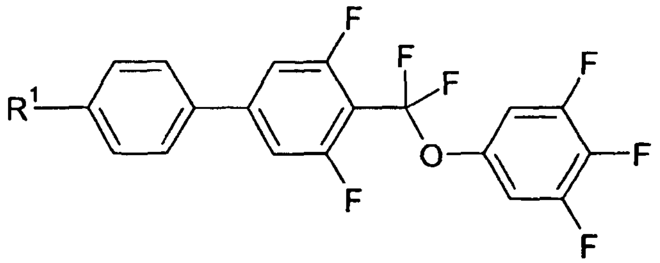

IIIb

worin $R^1$ wie für Formel III definiert ist.

Ein weiterer Gegenstand der Erfindung ist die Verwendung der Verbindungen der Formel I in flüssigkristallinen Medien, bevorzugt in Medien mit einer optisch isotropen flüssigkristallinen Phase, vorzugsweise einer blauen Phase. Diese Phase ist vorzugsweise durch Polymer stabilisiert. In der Regel wird der Monomeranteil des Mediums bei einer Temperatur polymerisiert, bei der es in der blauen Phase vorliegt. Dadurch verbreitert sich der Stabilitätsbereich dieser Phase. Mit den erfindungsgemäßen Verbindungen und Medien ist eine erhebliche Verbesserung der bislang erreichbaren Eigenschaften der polymerstabilisierten Medien in der blauen Phase verbunden.

Die flüssigkristallinen Medien können darüber hinaus weitere Zusätze wie Stabilisatoren, chirale Dotierstoffe und Nanopartikel enthalten. Die einzelnen, zugesetzten Verbindungen werden in Konzentrationen von vorzugsweise von 0,1 bis 6 % eingesetzt. Die Konzentrationen der einzelnen verwendeten Verbindungen liegen vorzugsweise jeweils im Bereich von 0,1 % bis 3 %. Dabei werden jedoch die Konzentrationsangaben der übrigen Bestandteile der Flüssigkristallmischungen, also der flüssigkristallinen oder mesogenen Verbindungen und gegebenenfalls der Polymerisationskomponenten, ohne Berücksichtigung der Konzentration dieser Zusatzstoffe angegeben.

Vorzugsweise enthalten die flüssigkristallinen Medien 0,01 bis 10 Gew.% eines optisch aktiven, chiralen Dotierstoffs. Dieser unterstützt die Bildung einer flüssigkristallinen blauen Phase. Für blaue Phasen werden bevorzugt chirale Dopants mit hoher HTP ('helical twisting power') eingesetzt, typischerweise im Bereich von 2-5 Gew.-%.

Die erfindungsgemäßen Medien enthalten vorzugsweise eine oder mehrere polymerisierbare Verbindungen, oder sie sind durch ein daraus erhaltenes Polymer stabilisiert, wobei die Polymerisation vorzugsweise in der blauen Phase erfolgt.

Vorzugsweise enthalten die flüssigkristallinen Medien 0 bis 10 Gew.%, insbesondere 0,01 bis 5 Gew.% und besonders bevorzugt 0,1 bis 3 Gew.% an Stabilisatoren. Vorzugsweise enthalten die Medien einen oder mehrere Stabilisatoren ausgewählt aus 2,6-Di-tert-butylphenolen, 2,2,6,6-Tetramethylpiperidinen oder 2-Benzotriazol-2-yl-phenolen. Diese Hilfsstoffe sind dem Fachmann bekannt und kommerziell erhältlich, z. B. als Lichtschutzmittel.

Eine Ausführungsform der Erfindung ist daher auch ein Verfahren zur Herstellung eines Flüssigkristallmediums, das dadurch gekennzeichnet ist, dass eine oder mehrere Verbindungen der Formel I mit einer oder mehreren flüssigkristallinen Verbindungen, vorzugsweise ausgewählt aus den Formeln II und III, optional mit einer oder mehreren weiteren Verbindungen und optional mit einem oder mehreren Additiven gemischt wird. Optional wird der polymerisierbare Anteil des flüssigkristallinen Mediums anschließend polymerisiert.

Ein weiterer Gegenstand der vorliegenden Erfindung ist die Verwendung der erfindungsgemäßen Verbindungen oder Medien in einer elektrooptischen Vorrichtung, vorzugsweise einer Flüssigkristallanzeige, und solche Vorrichtungen selbst. Die Anzeigen arbeiten vorzugsweise wenigstens teilweise im Bereich der blauen Phase, die vorzugsweise eine polymerstabilisierte blaue Phase ist. Die Medien und Anzeigen arbeiten alternativ auch bevorzugt in der nematischen Phase.

Eine erfindungsgemäße polymerstabilisierte Vorrichtung wird vorzugsweise so hergestellt, dass man die Polymerisation der polymerisierbaren Bestandteile des Medium in der Vorrichtung selbst, also in der optoelektronischen Zelle, durchführt.

Der Aufbau der erfindungsgemäßen elektrooptischen Anzeigevorrichtung besteht vorzugsweise aus einer Zelle umfassend zwei gegenüberliegende Substrate, die das flüssigkristalline Medium umschließen, und aus in der Zelle angebrachten Elektroden. Die Elektroden sind vorzugsweise so gestaltet, dass sie ein elektrisches Feld erzeugen können, das im flüssigkristallinen Medium einen parallel zu den Substraten (bzw. senkrecht zur Lichtachse) ausgerichteten Anteil besitzt. Die Elektroden sind vorzugsweise als Kammelektroden (Interdigitalelektroden) auf einem der Substrate aufgebracht. Vorzugsweise sind eines oder beide Substrate transparent. Im Fall der Anzeigen, die in der blauen Phase arbeiten, wird durch das Anlegen einer Spannung das optisch isotrope Medium doppelbrechend. Zusammen mit entsprechend angeordneten Polarisatoren wird ein optischer Schaltvorgang erreicht.

In der vorliegenden Anmeldung beschreibt der Ausdruck dielektrisch positiv Verbindungen oder Komponenten mit $\Delta\varepsilon > 3,0$, dielektrisch neutral mit $-1,5 \leq \Delta\varepsilon \leq 3,0$ und dielektrisch negativ mit $\Delta\varepsilon < -1,5$. Die dielektrische Anisotropie der jeweiligen Verbindung wird aus den Ergebnissen einer Lösung von 10 % der jeweiligen einzelnen Verbindung in

einer nematischen Host-Mischung bestimmt. Wenn die Löslichkeit der jeweiligen Verbindung in der Host-Mischung weniger als 10 % beträgt, wird die Konzentration auf 5 % reduziert. Die Kapazitäten der Testmischungen werden sowohl in einer Zelle mit homeotroper als auch mit homogener Orientierung bestimmt. Die Schichtdicke beträgt bei beiden Zelltypen ca. 20 μm. Die angelegte Spannung ist eine Rechteckwelle mit einer Frequenz von 1 kHz und einem Effektivwert von typischerweise 0,5 V bis 1,0 V, wird jedoch stets so ausgewählt, dass sie unterhalb der kapazitiven Schwelle für die jeweilige Testmischung liegt.

Als Host-Mischung wird für dielektrisch positive Verbindungen die Mischung ZLI-4792 und für dielektrisch neutrale sowie für dielektrisch negative Verbindungen die Mischung ZLI-3086 verwendet, beide von Merck KGaA, Deutschland. Die absoluten Werte der dielektrischen Konstanten der Verbindungen werden aus der Änderung der jeweiligen Werte der Host-Mischung bei Zugabe der interessierenden Verbindungen bestimmt. Die Werte werden auf eine Konzentration der interessierenden Verbindungen von 100 % extrapoliert.

Komponenten, die bei der Messtemperatur von 20°C eine nematische Phase aufweisen, werden als solche gemessen, alle anderen werden wie Verbindungen behandelt.

Die in dieser Anmeldung angegebenen Parameterbereiche schließen sämtlich die Grenzwerte ein, wenn nicht ausdrücklich etwas anderes angegeben ist.

In der gesamten Anmeldung gelten, wenn nicht ausdrücklich anders angegeben, die folgenden Bedingungen und Definitionen. Alle Konzentrationen sind in Massenprozent angegeben und beziehen sich jeweils auf die Gesamtmischung. Alle Temperaturen, wie z.B. der Schmelzpunkt T(K,N) bzw. T(K,S), der Übergang von der smektischen (S) zur nematischen (N) Phase T(S,N) und der Klärpunkt T (N,I) der Flüssigkristalle sind in Grad Celsius angegeben. Alle Temperaturdifferenzen sind in Differenzgraden angegeben. Alle für Flüssigkristalle typischen physikalischen Eigenschaften werden nach "Merck Liquid Crystals, Physical Properties of Liquid Crystals", Stand Nov. 1997, Merck KGaA, Deutschland, bestimmt und sind für eine Temperatur von 20°C aufgeführt, wenn nicht ausdrücklich anders angegeben. Die optische Anisotropie (Δn) wird bei einer Wellenlänge von 589,3 nm bestimmt. Die dielektrische Anisotropie (Δε) wird bei einer Frequenz von 1 kHz bestimmt. Δε ist als ($\varepsilon_{\parallel}$ - $\varepsilon_{\perp}$) definiert, während $\varepsilon_{Drchschn.}$ ($\varepsilon_{\parallel}$ + 2 $\varepsilon_{\perp}$) / 3 ist.

Die Schwellenspannungen sowie alle anderen elektrooptischen Eigenschaften werden mit bei Merck KGaA, Deutschland, hergestellten Testzellen bestimmt. Die Testzellen für die Bestimmung von Δε besitzen eine Schichtdicke von circa 20 μm. Bei der Elektrode handelt es sich um eine kreisförmige ITO-Elektrode mit einer Fläche von 1,13 $cm^2$ und einem Schutzring. Die Ausrichtungsschichten sind SE-1211 von Nissan Chemicals, Japan, für homeotrope Ausrichtung ($\varepsilon_{\parallel}$) und Polyimid AL-1 054 von Japan Synthetic Rubber, Japan, für homogene Ausrichtung ($\varepsilon_{\perp}$). Die Bestimmung der Kapazitäten erfolgt mit einem Frequenzgang-Analysegerät Solatron 1260 unter Verwendung einer Sinuswelle mit einer Spannung von 0,3 $V_{rms}$. Als Licht wird bei den elektrooptischen Messungen weißes Licht verwendet. Dabei wird ein Aufbau mit einem im Handel erhältlichen Gerät DMS der Fa. Autronic-Melchers, Germany verwendet. Die charakteristischen Spannungen werden unter senkrechter Beobachtung bestimmt. Die Schwellenspannung ($V_{10}$), "Mittgrau-Spannung" ($V_{50}$) und Sättigungsspannung ($V_{90}$) werden für 10 %, 50 % bzw. 90 % relativen Kontrast bestimmt.

Die Werte für die Komponenten der Eigenschaften senkrecht bzw. and parallel zum Direktor des Flüssigkristalls werden durch Orientierung des Flüssigkristalls in einem Magnetfeld erhalten. Dazu wird das Magnetfeld eines Permanentmagneten verwendet. Die Stärke des Magnetfelds beträgt 0,35 Tesla. Die Orientierung des Magneten wird entsprechend eingestellt und dann entsprechend um 90° gedreht.

In der vorliegenden Anmeldung, bedeutet, wenn nicht ausdrücklich anders angegeben, der Begriff Verbindungen sowohl eine Verbindung, als auch mehrere Verbindungen.

Der Ausdruck "Alkyl" umfasst vorzugsweise geradkettige und verzweigte Alkylgruppen mit 1 bis 15 Kohlenstoffatomen, insbesondere die geradkettigen Gruppen Methyl, Ethyl, Propyl, Butyl, Pentyl, Hexyl und Heptyl. Gruppen mit 2 bis 10 Kohlenstoffatomen sind im Allgemeinen bevorzugt.

Der Ausdruck "Alkenyl" umfasst vorzugsweise geradkettige und verzweigte Alkenylgruppen mit 2 bis 15 Kohlenstoffatomen, insbesondere die geradkettigen Gruppen. Besonders bevorzugte Alkenylgruppen sind $C_2$ bis $C_7$-1 E-Alkenyl, $C_4$ bis $C_7$-3E-Alkenyl, $C_5$ bis $C_7$-4-Alkenyl, $C_6$ bis $C_7$-5-Alkenyl und $C_7$-6-Alkenyl, insbesondere $C_2$ bis $C_7$-1 E-Alkenyl, $C_4$ bis $C_7$-3E-Alkenyl und $C_5$ bis $C_7$-4-Alkenyl. Beispiele weiterer bevorzugter Alkenylgruppen sind Vinyl, 1 E-Propenyl, 1 E-Butenyl, 1 E-Pentenyl, 1 E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Alkoxy" umfasst vorzugsweise geradkettige Reste der Formel $C_nH_{2n+1}$-O-, worin n 1 bis 10 bedeuten. Vorzugsweise ist n 1 bis 6. Bevorzugte Alkoxygruppen sind beispielsweise Methoxy, Ethoxy, n-Propoxy, n-Butoxy, n-Pentoxy, n-Hexoxy, n-Heptoxy, n-Octoxy, n-Nonoxy, n-Decoxy.

Der Ausdruck "Oxaalkyl" bzw. "Alkoxyalkyl" umfasst vorzugsweise geradkettige Reste der Formel $C_nH_{2n+1}$-O-$(CH_2)_m$ worin n und m jeweils unabhängig voneinander 1 bis 10 bedeuten. Vorzugsweise ist n 1 und m 1 bis 6.

Der Ausdruck "fluorierter Alkylrest" umfasst vorzugsweise ein- oder mehrfach fluorierte Reste. Perfluorierte Reste sind eingeschlossen. Besonders bevorzugt sind $CF_3$, $CH_2CF_3$, $CH_2CHF_2$, $CHF_2$, $CH_2F$, $CHFCF_3$ und $CF_2CHFCF_3$.

Der Ausdruck "fluorierter Alkoxyrest" umfasst vorzugsweise ein- oder mehrfach fluorierte Reste. Perfluorierte

Reste sind eingeschlossen. Besonders bevorzugt ist $OCF_3$.

1,4-Cyclohexanringe liegen vorzugsweise in der 1,4-trans-Konfiguration vor. Die Beispielverbindungen sind trans-konfiguriert.

In der vorliegenden Anmeldung bedeutet der Begriff "Verbindungen, sofern nicht explizit anders angegeben, sowohl eine als auch mehrere Verbindungen. Umgekehrt schließt der Begriff "\/erbindung" generell auch mehrere Verbindungen ein, sofern dies laut Definition möglich und nicht anders angegeben ist. Gleiches gilt für die Begriffe flüssigkristalline Medien und flüssigkristallines Medium. Der Begriff "Komponente" umfasst jeweils eine oder mehrere Stoffe, Verbindungen und/oder Teilchen.

Die erfindungsgemäßen Flüssigkristallmedien bestehen aus mehreren Verbindungen, vorzugsweise aus 3 bis 30, stärker bevorzugt aus 4 bis 20 und ganz bevorzugt aus 4 bis 16 Verbindungen. Diese Verbindungen werden auf herkömmliche Weise gemischt. In der Regel wird die gewünschte Menge der in der geringeren Menge verwendeten Verbindung in der in der größeren Menge verwendeten Verbindung gelöst. Liegt die Temperatur über dem Klärpunkt der in der höheren Konzentration verwendeten Verbindung, ist die Vervollständigung des Lösungsvorgangs besonders leicht zu beobachten. Es ist jedoch auch möglich, die Medien auf anderen üblichen Wegen, beispielsweise unter Verwendung von so genannten Vormischungen, bei denen es sich z.B. um homologe oder eutektische Mischungen von Verbindungen handeln kann, oder unter Verwendung von so genannten "Multi-Bottle"-Systemen, deren Bestandteile selbst gebrauchsfertige Mischungen sind, herzustellen.

Die folgenden Beispiele erläutern die vorliegende Erfindung, ohne sie in irgendeiner Weise zu beschränken.

Aus den physikalischen Eigenschaften wird dem Fachmann jedoch deutlich, welche Eigenschaften zu erzielen sind und in welchen Bereichen sie modifizierbar sind. Insbesondere ist also die Kombination der verschiedenen Eigenschaften, die vorzugsweise erreicht werden können, für den Fachmann gut definiert.

Weitere Abkürzungen:

BnBr Benzylbromid
THF Tetrahydrofuran
Pd/C handelsüblicher Katalysator mit Palladium auf Träger aus Aktivkohle
DMAP 4-Dimethylaminopyridin
MTBE Methyl-tert-butylether
$SiO_2$ Kieselgel zur Chromatographie

**Beispiele**

<u>Beispiel 1:</u> 2-{4'-[(3,5-Difluor-4-trifluormethyl-phenoxy)-difluor-methyl]-2,3',5'-trifluor-biphenyl-4-yl}-5-propyl-tetrahydropyran

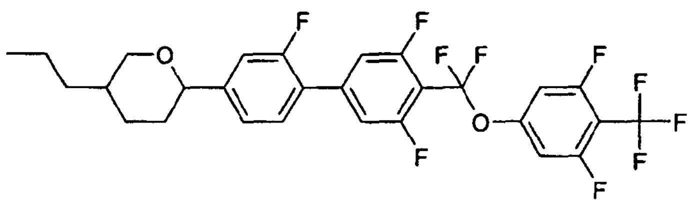

Die erfindungsgemäße Verbindung wird wie nachfolgend beschrieben hergestellt:

1.1 Synthese von 1-Benzyloxy-4-brom-2-fluorbenzol

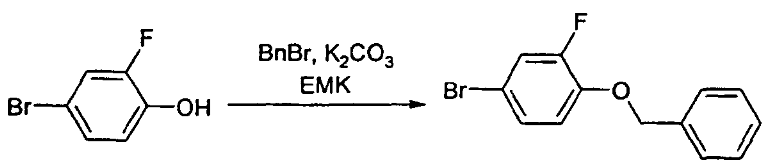

210,0 g (1,10 mol) 4-Brom-2-fluorphenol werden in 1,1 l Ethylmethylketon gelöst, und 175,0 g (1,27 mol) Kaliumcarbonat und 150,0 ml (1,26 mol) Benzylbromid werden zugegeben. Die Mischung wird 5 h refluxiert und 16 h bei Raumtemperatur gerührt. Der Ansatz wird filtriert, und das Filtrat wird vollständig konzentriert. Das Rohprodukt wird bei erniedrigter Temperatur aus Heptan kristallisiert.

1.2 Synthese von 4-Benzyloxy-3-fluorbenzaldehyd

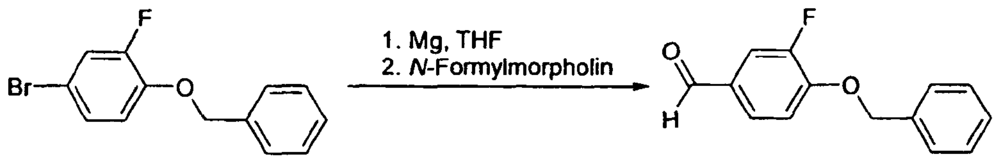


25,9 g (1,07 mol) Magnesiumspäne werden in 200 ml THF vorgelegt, und eine Lösung von 285,6 g (1,02 mol) 1-Benzyloxy-4-brom-2-fluorbenzol in 700 ml THF wird derart zugetropft, dass nach Anspringen der *Grignard*-Reaktion ein leichter Rückfluss bestehen bleibt. Nach beendeter Zugabe wird mit 1000 ml THF verdünnt, und der Ansatz wird 1 h zum Sieden erhitzt. Die Lösung des Gringnard-Reagenzes wird auf 0 °C abgekühlt, und 118 ml (1,07 mol) N-Formylmorpholin in 100 ml THF werden zugetropft. Nach 1 h wird mit MTBE verdünnt und mit verdünnter Salzsäure hydrolysiert. Die organische Phase wird abgetrennt, und die wässrige Phase wird mit MTBE extrahiert. Die vereinigten organischen Phasen werden mit gesättigter Natriumchloridlösung gewaschen und mit Natriumsulfat getrocknet. Die Lösung wird vollständig konzentriert, und das Rohprodukt wird aus *n*-Heptan : MTBE umkristallisiert.

1.3 Synthese von 2-(4-Benzyloxy-3-fluorphenyl)-4-brom-5-propyl-tetrahydropyran

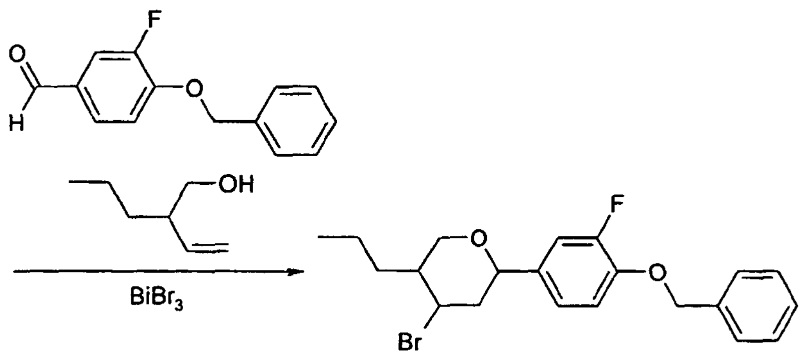


188,0 g (0,79 mol) 4-Benzyloxy-3-fluorbenzaldehyd werden zusammen mit 90,0 g (0,79 mol) 2-Vinyl-pentan-1-ol in 1000 ml Dichlormethan bei 0 °C vorgelegt. 176,0 g (0,39 mol) Bismut(III)-bromid werden portionsweise zugegeben, und die Mischung wird 19 h bei Raumtemperatur gerührt. Unlösliche Bestandteile werden abgetrennt, und die Mischung wird absorptiv ($SiO_2$, $CH_2Cl_2$) filtriert. Das Filtrat wird vollständig konzentriert, und der Rückstand wird säulenchromatographisch ($SiO_2$, *n*-Heptan : MTBE = 4 : 1) gereinigt. Das erhaltene Öl wird in Chlorbutan aufgenommen und die Lösung wird in kaltes Ethanol getropft. Die ausfallenden Kristalle werden gesammelt und nochmals aus *n*-Heptan umkristallisiert. Auf diese Weise wird 2-(4-Benzyloxy-3-fluorphenyl)-4-brom-5-propyl-tetrahydropyran als gelblicher Feststoff erhalten.

1.4 Synthese von 2-Fluor-4-(5-propyl-tetrahydropyran-2-yl)-phenol

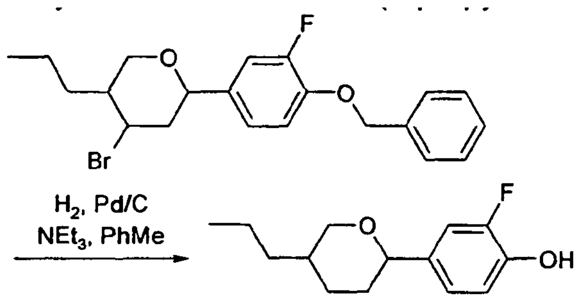


123,0 g (0,30 mol) 2-(4-Benzyloxy-3-fluorphenyl)-4-brom-5-propyl-tetrahydropyran werden in Gegenwart von Pd/C (5% Pd) und 86,0 ml (0,60 mol) Triethylamin in Toluol/Wasser hydriert. Die Reaktionslösung wird mit MTBE verdünnt, und die organische Phase wird abgetrennt. Die wässrige Phase wird mit MTBE extrahiert. Die vereinigten organischen Phasen werden mit Wasser gewaschen und mit Natriumsulfat getrocknet. Die Lösung wird vollständig konzentriert, und der Rückstand wird direkt für die folgende Umsetzung verwendet.

1.5 Synthese von Trifluormethansulfonsäure-2-fluor-4-(*trans*-5-propyl-tetrahydropyran-2-yl)-phenylester

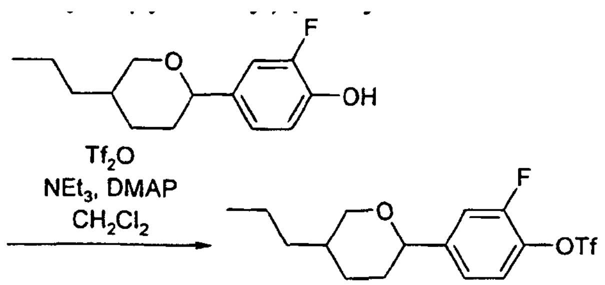


62,0 g (0,26 mol) 2-Fluor-4-(5-propyl-tetrahydropyran-2-yl)-phenol werden zusammen mit 55,0 ml (0,40 mol) Triethylamin und 0,65 g (5,32 mmol) DMAP bei 0 °C in 600 ml Dichlormethan vorgelegt. 45,0 ml (0,27 mol) Trifluormethansulfonsäureanhydrid ($Tf_2O$) werden zudosiert und die Mischung wird 17 h bei Raumtemperatur gerührt. Der Ansatz wird mit Wasser gewaschen, und die wässrige Phase wird mit Dichlormethan extrahiert. Die vereinigten organischen Phasen werden mit Natriumsulfat getrocknet, und die Lösung wird vollständig konzentriert. Der Rückstand wird säulenchromatographisch gereinigt Trifluormethansulfonsäure-2-fluor-4-(*trans*-5-propyl-tetrahydropyran-2-yl)-phenylester wird als farblose Flüssigkeit erhalten.

1.6 Synthese von 2-{4'-[(3,5-Difluor-4-trifluormethyl-phenoxy)-difluormethyl]-2,3',5'-trifluor-biphenyl-4-yl}-5-propyl-tetrahydropyran

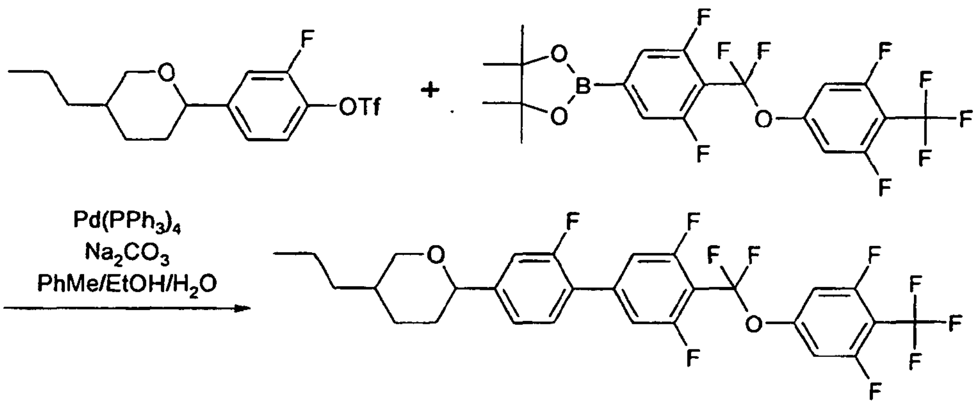

Eine Mischung aus 10,0 g (27,0 mmol) Trifluormethansulfonsäure-2-fluor-4-(*trans*-5-propyl-tetrahydropyran-2-yl)-phenylester und 14,3 g (29,4 mmol) 2-{4-[(3,5-Difluor-4-trifluormethyl-phenoxy)-difluormethyl]-3,5-difluorphenyl}-4,4,5,5-tetramethyl-[1,3,2]dioxaborolan, 1,50 g (1,30 mmol) Tetrakis(triphenylphosphin)-palladium(0) und 30 ml 2 N Natriumcarbonatlösung in 100 ml Toluol/Ethanol (1 : 1) wird 20 h zum Rückfluss erhitzt. Nach dem Abkühlen wird die organische Phase abgetrennt, und die wässrige Phase wird mit MTBE extrahiert. Die vereinigten organischen Phasen werden mit Wasser gewaschen. Die Lösung wird mit Natriumsulfat getrocknet und vollständig konzentriert. Der Rückstand wird säulenchromatographisch ($SiO_2$, *n*-Heptan : Toluol = 7 : 3) gereinigt. Die weitere Reinigung erfolgt durch Umkristallisation aus Ethanol und *n*-Heptan. 2-{4'-[(3,5-Difluor-4-trifluormethyl-phenoxy)-difluormethyl]-2,3',5'-trifluor-biphenyl-4-yl}-5-propyl-tetrahydropyran wird als farbloser Feststoff (Schmp. 95 °C) erhalten.
**$^1$H-NMR** (300 MHz, $CHCl_3$): δ = 7,42-7,35 (m, 1H, $H_{arom.}$), 7,25-7,18 (m, 4H, $H_{arom.}$), 6,98 (d, 2H, J = 9,8 Hz, $H_{arom.}$), 4,31 (dd, 1H, J = 11,4 Hz, J = 2,1 Hz), 4,11 (dm, 1H, J = 11,4 Hz), 3,22 (t, 1H, J = 11,4 Hz), 2,06-1,97 (m, 1H), 1,96-1,88 (m, 1H), 1,76-1,61 (m, 1H), 1,59-1,50 (m, 1H), 1,46-1,06 (m, 5H), 0,93 (t, 3H).
**$^{19}$F-NMR** (282 MHz, $CHCl_3$): δ = -56,3 (t, 3F, J = 22,1 Hz, $-CF_3$), -61,7 (t, 2F, J = 26,1 Hz, $-OCF_2-$), -108,2 bis -108,4 (m, 2F, $F_{arom.}$), -110,6 bis - 110,8 (m, 2F, $F_{arom.}$), -117,0 (dd, 1F, J = 12,0 Hz, J = 7,8 Hz, $F_{arom.}$).
**MS (EI)**: m/z(%) = 580 (18, $M^+$), 383 (100).

<u>Vergleich physikalischer Daten</u>

| Verbindung | Beispiel 1 | Vergleichsbeispiel 1 [DE 103 53 658] |
|---|---|---|
| Struktur | 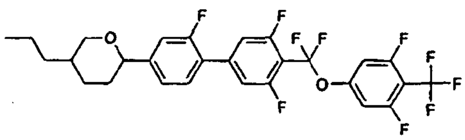 AGUQU-3-T | 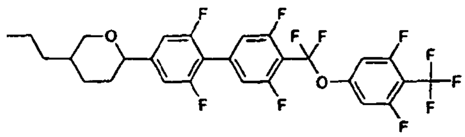 AUUQU-3-T |
| Phase | K 95 N (89.9) | K91 I |
| Klp. / °C | 71 | 47 |
| Δε | 39,6 | 40,8 |
| Δn | 0,1379 | 0,1190 |
| Δε·Δn | 5,46 | 4,86 |
| Löslichkeit In ZLI- 4792 | 10% | 5% |

Die Verbindung gemäß Beispiel 1 hat einen höheren extrapolierten Klärpunkt und eine günstigere Kombination aus Δε und Δn als Vergleichsbeispiel 3. Weiterhin ist sie besser löslich in nematischen FK-Medien.

Die vorteilhaften Eigenschaften der Verbindung "AGUQU-3-T" waren aus dem Vergleich der literaturbekannten Verbindungen Vergleichsbeispiel 2 und Vergleichsbeispiel 3 miteinander nicht ersichtlich, denn es wird ein umgekehrter Trend der Größe Δε· Δn beobachtet.

| Verbindung | Vergleichsbeispiel 2 [DE 103 53 658] | Vergleichsbeispiel 3 [DE 103 53 658] |
|---|---|---|
| Struktur | 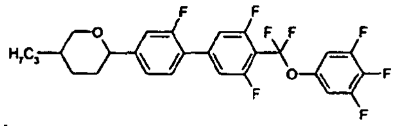 | 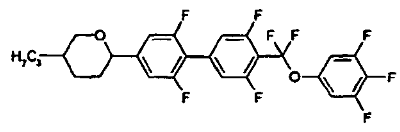 |
| Phase | K 70 N 102, 3 I | K 83 N (83,0) I |
| Δε | 29,7 | 34,9 |

(fortgesetzt)

| Verbindung | Vergleichsbeispiel 2 | Vergleichsbeispiel 3 |
|---|---|---|
| Δn | 0,1364 | 0,1231 |
| Δε · Δn | 4,05 | 4,30 |

Beispiel 2: 2-{4'-[(3,5-Difluor-4-trifluormethyl-phenoxy)-difluor-methyl]-2,3',5'-trifluor-biphenyl-4-yl}-5-ethyl-tetrahydropyran

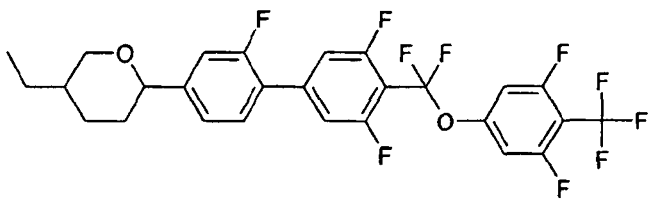

Die erfindungsgemäße Verbindung wird wie nachfolgend beschrieben hergestellt:

2.1 Synthese von 4-Brom-2-(4-brom-3-fluor-phenyl)-5-ethyl-tetrahydropyran

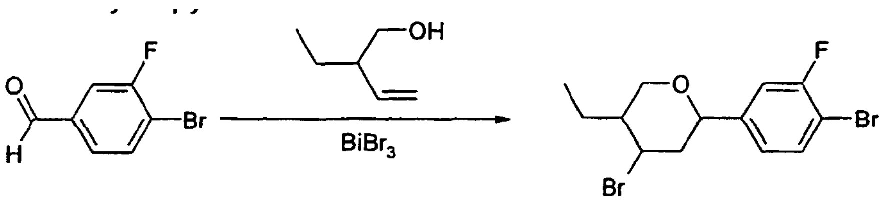


72,9 g (0,16 mol) Bismut(III)-bromid werden in 50 ml Toluol bei -10 °C vorgelegt, und eine Lösung von 50,0 g (0,25 mol) 4-Brom-3-fluorbenzaldehyd in 250 ml Toluol wird tropfenweise zugegeben. Bei dieser Temperatur wird eine Lösung von 27,0 g (0,27 mol) 2-Ethyl-but-3-en-1-ol in 50 ml Toluol zudosiert, und die Mischung wird 2 h bei 10 °C gerührt. Der Ansatz wird mit verdünnter Salzsäure versetzt, und die organische Phase wird abgetrennt. Die wässrige Phase wird mit Toluol extrahiert, und die vereinigten organischen Phasen werden nacheinander mit Wasser, gesättigter Natriumhydrogencarbonatlösung und gesättigter Natriumchloridlösung gewaschen. Die Lösung wird mit Natriumsulfat getrocknet und vollständig konzentriert. Das Rohprodukt wird säulenchromatographisch ($SiO_2$, *n*-Heptan : Toluol = 2 : 1) gereinigt. 4-Brom-2-(4-brom-3-fluor-phenyl)-5-ethyl-tetrahydropyran wird als farbloses Öl erhalten.

2.2 Synthese von 4-Brom-5-ethyl-2-[3-fluor-4-(4,4,5,5-tetramethyl-[1,3,2]dioxaborolan-2-yl)-phenyl]-tetrahydropyran

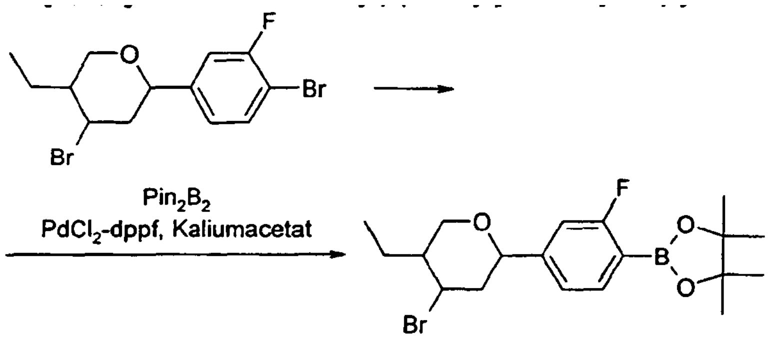


75,0 g (0,20 mol) 4-Brom-2-(4-brom-3-fluor-phenyl)-5-ethyl-tetrahydropyran werden zusammen mit 60,0 g (0,24 mol) Bis(pinakolat)dibor, 50,0 g (0,51 mol) Kaliumacetat und 1,5 g (2,04 mmol) [1,1'-Bis(diphenylphosphin)ferrocen]palladium (II)-chlorid in 400 ml Toluol 18 h auf 105 °C erhitzt. Nach dem Abkühlen wird die Mischung mit Wasser gewaschen, und die organische Phase wird abgetrennt. Die wässrige Phase wird mit Toluol extrahiert, und die vereinigten organischen Phasen werden mit gesättigter Natriumchloridlösung gewaschen. Die Lösung wird mit Natriumsulfat getrocknet und vollständig konzentriert. Das Rohprodukt wird säulenchromatographisch ($SiO_2$, *n*-Heptan : Toluol = 1 : 1) gereinigt. 4-Brom-5-ethyl-2-[3-fluor-4-(4,4,5,5-tetramethyl-[1,3,2]dioxaborolan-2-yl)-phenyl]-tetrahydropyran wird als gelbliches Öl erhalten.

2.3 Synthese von 5-Ethyl-2-[3-fluor-4-(4,4,5,5-tetramethyl [1,3,2]dioxaborolan-2-yl)-phenyl]-tetrahydropyran

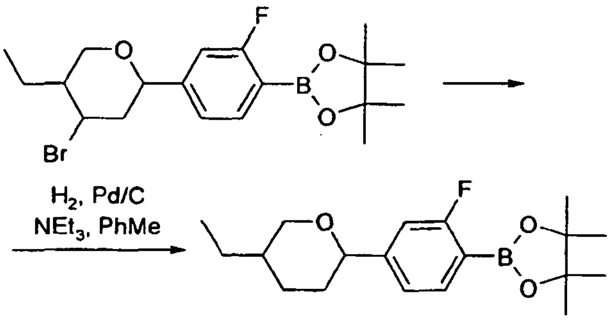


18,0 g (36,2 mmol) 4-Brom-5-ethyl-2-[3-fluor-4-(4,4,5,5-tetramethyl-[1,3,2]dioxaborolan-2-yl)-phenyl]-tetrahydropyran werden in Gegenwart von Pd/C (5% Pd) und 12,7 ml (88,1 mmol) Triethylamin in Toluol/Wasser bei 5 bar Wasserstoffdruck und 80 °C für 30 h hydriert. Die organische Phase wird abgetrennt und absorptiv ($SiO_2$, Toluol) filtriert. Das Filtrat wird vollständig konzentriert, und der Rückstand wird bei erniedrigter Temperatur aus Ethanol umkristallisiert. 5-Ethyl-2-[3-fluor-4-(4,4,5,5-tetramethyl[1,3,2]dioxaborolan-2-yl)-phenyl]-tetrahydropyran wird als farbloser Feststoff erhalten.

2.4 Synthese von 2-{4'-[(3,5-Difluor-4-trifluormethyl-phenoxy)-difluormethyl]-2,3',5'-trifluor-biphenyl-4-yl}-5-ethyl-tetrahydropyran

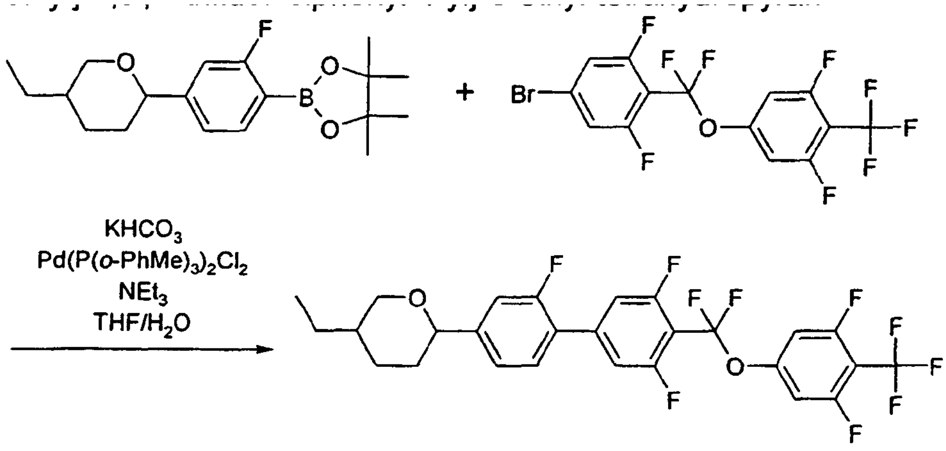


5,20 g (15,0 mmol) 5-Ethyl-2-[3-fluor-4-(4,4,5,5-tetramethyl[1,3,2]-dioxaborolan-2-yl)-phenyl]-tetrahydropyran werden zusammen mit 6,93 g (15,0 mmol) 5-((4-brom-2,6-difluorphenyl)difluormethoxy)-1,3-difluor-2-(trifluoromethyl)benzol in 35 ml THF vorgelegt. 590 mg (0,75 mmol) Bis(tri-*o*-tolylphosphin)palladium(II)-chlorid und 0,1 ml (0,75 mmol) Triethylamin werden zugegeben. Die Mischung wird auf 50 °C erhitzt, und eine Lösung von 2,41 g (24,0 mmol) Kaliumhydrogencarbonat in 15 ml Wasser wird zugegeben. Nach 3 h bei dieser Temperatur werden Wasser und MTBE zugegeben, und die organische Phase wird abgetrennt. Die wässrige Phase wird mit MTBE gewaschen, und die vereinigten organischen Phasen werden mit gesättigter Natriumchloridlösung gewaschen und mit Natriumsulfat getrocknet. Die Lösung wird vollständig konzentriert, und das Rohprodukt wird säulenchromatographisch ($SiO_2$, *n*-Heptan : Toluol = 1 : 1) gereinigt. Die weitere Reinigung erfolgt durch Umkristallisation aus Ethanol und *n*-Heptan. 2-{4'-[(3,5-Difluor-4-trifluormethyl-phenoxy)-difluormethyl]-2,3',5'-trifluor-biphenyl-4-yl}-5-ethyl-tetrahydropyran wird als farbloser Feststoff mit einem Schmp. von 90°C erhalten.
**$^1$H-NMR** (400 MHz, $CHCl_3$): δ = 7,41-7,36 (m, 1H, $H_{arom.}$), 7,25-7,19 (m, 4H, $H_{arom.}$), 6,98 (d, 2H, J = 9,8 Hz, $H_{arom.}$), 4,31 (dd, 1H, J = 11,5 Hz, J = 2,1 Hz), 4,13 (dm, 1H, J = 11,5 Hz), 3,22 (t, 1H, J = 11,5 Hz), 2,07-2,00 (m, 1H), 1,65-1,51 (m, 3H), 1,33-1,13 (m, 3H), 0,94 (t, 3H, J = 7,5 Hz).
**$^{19}$F-NMR** (282 MHz, $CHCl_3$): δ = -56,8 (t, 3F, J = 22,1 Hz, $-CF_3$), -62,2 (t, 2F, J = 26,1 Hz, $-OCF_2-$), -108,7 bis -108,9 (m, 2F, $F_{arom.}$), -111,1 bis -111,3 (m, 2F, $F_{arom.}$), -117,5 (dd, 1 F, J = 12,0 Hz, J = 7,8 Hz, $F_{arom.}$).
**MS** (EI): m/z(%) = 566 (11, $M^+$), 369 (100).

Physikalische Daten

| Verbindung | Beispiel 2 |
|---|---|
| Struktur | 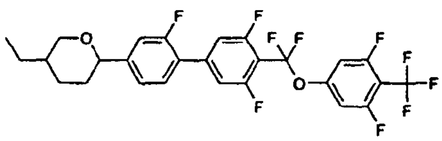 |
| Phase | K 90 I |
| Klp. / °C | 53 |
| Δε | 39,3 |
| Δn | 0,1316 |
| Δε· Δn | 5,17 |
| Löslichkeit in ZLI-4792 | 10% |

Die Verbindung gemäß Beispiel 2 hat einen hohen extrapolierten Klärpunkt und eine günstige Kombination aus Δε und Δn. Die Verbindung ist gut löslich in nematischen Medien. Die Vergleichsbeispiele 4 und 5 lassen dies nicht erkennen:

| Verbindung | Vergleichsbeispiel 4 [DE 103 53 658] | Vergleichsbeispiel 5 [DE 103 53 658] |
|---|---|---|
| Struktur | 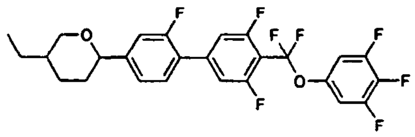 | 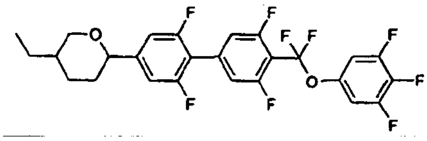 |
| Phase | K 89 N (76,8) I | K 91 N (58,8) I |
| Δε | 29,9 | 35,0 |
| Δn | 0,1310 | 0,1149 |
| Δε· Δn | 3,91 | 4,02 |

Beispiel 3: 2-{4'-[(3,5-Difluor-4-trifluoromethyl-phenoxyl-difluormethyl]-2,3',5'-trifluor-biphenyl-4-yl}-5-pentyl-tetrahydropyran

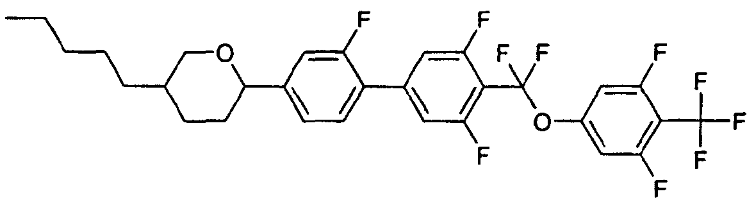

Die erfindungsgemäße Verbindung wird analog zu Beispiel 2 hergestellt. 2-{4'-[(3,5-Difluor-4-trifluormethyl-phenoxy)-difluor-methyl]-2,3',5'-trifluor-biphenyl-4-yl}-5-pentyl-tetrahydropyran wird als farbloser Feststoff mit einem Schmp. von 75 °C erhalten.

**$^1$H-NMR** (300 MHz, $CHCl_3$): δ = 7,42-7,35 (m, 1H, $H_{arom.}$), 7,25-7,18 (m, 4H, $H_{arom.}$), 6,98 (d, 2H, J = 9,9 Hz, $H_{arom.}$), 4,31 (dd, 1H, J = 11,4 Hz, J = 2,0 Hz), 4,11 (dm, 1H, J = 11,4 Hz), 3,21 (t, 1H, J = 11,4 Hz), 2,07-1,97 (m, 1H), 1,96-1,88 (m, 1H), 1,74-1,49 (m, 3H), 1,40-1,07 (m, 8H), 0,90 (t, 3H, J = 6,9 Hz).

**$^{19}$F-NMR** (282 MHz, $CHCl_3$): δ = -56,3 (t, 3F, J = 21,9 Hz, $-CF_3$), -61,7 (t, 2F, J = 26,4 Hz, $-OCF_2-$), -108,2 bis -108,4 (m, 2F, $F_{arom.}$), -110,6 bis -110,8 (m, 2F, $F_{arom.}$), -117,0 (dd, 1F, J = 12,5 Hz, J = 8,0 Hz, $F_{arom.}$)

**MS** (EI): m/z(%) = 608 (9, $M^+$), 411 (100).

Physikalische Daten

| Verbindung | Beispiel 3 |
|---|---|
| Struktur | 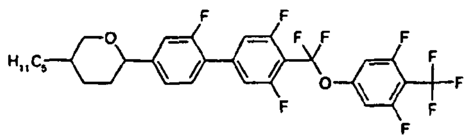 |
| Phase | K 80 N 96 I |
| Klp. / °C | 77 |
| Δε | 36,7 |
| Δn | 0,1350 |
| Δε·Δn | 4,95 |

(fortgesetzt)

| Verbindung | Beispiel 3 |
|---|---|
| Löslichkeit in ZLI-4792 | 10% |

Die Verbindung gemäß Beispiel 3 hat einen hohen extrapolierten Klärpunkt und eine günstige Kombination aus Δε und Δn. Die Verbindung hat eine relativ breite nematische Phase und ist gut löslich in nematischen Medien.

Beispiel 4: 5-Butyl-2-{4'-[(3,5-difluor-4-trifluormethyl-phenoxy)difluormethyl]-2,3',5'-trifluor-biphenyl-4-yl}-tetrahydropyran

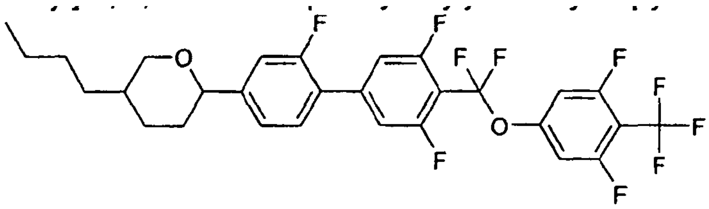

Die erfindungsgemäße Verbindung wird analog zu Beispiel 2 durch *Suzuki*-Kupplung von 5-Butyl-2-[3-fluor-4-(4,4,5,5-tetramethyl-[1,3,2]dioxaborolan-2-yl)-phenyl]-tetrahydropyran mit 5-((4-Brom-2,6-difluorphenyl)-difluormethoxy)-1,3-difluor-2-(trifluoromethyl)benzol hergestellt.
5-Butyl-2-{4'-[(3,5-difluor-4-trifluormethyl-phenoxy)difluor-methyl]-2,3',5'-trifluor-biphenyl-4-yl}-tetrahydropyran wird als farbloser Feststoff mit einem Schmp. von 88 °C erhalten. Die erfolgreiche Synthese wird NMRspektroskopisch ($^1H$, $^{19}F$, $^{13}C$) und massenspektroskopisch (EI) einwandfrei belegt.

Physikalische Daten

| Verbindung | Beispiel 4 |
|---|---|
| Struktur | 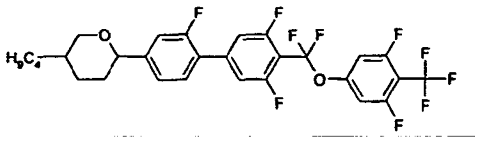 |
| Phase | K 79 N 88 I |
| Klp. / °C | 71 |
| Δε | 36,6 |
| Δn | 0,1309 |
| Δε·Δn | 4,79 |
| Löslichkeit in ZLI-4792 | 10% |

Die Verbindung gemäß Beispiel 4 hat einen hohen extrapolierten Klärpunkt und eine günstige Kombination aus Δε und Δn. Die Verbindung hat eine nematische Phase und ist gut löslich in nematischen Medien.

Beispiel 5: 2-{4'-[(3,5-Difluor-4-trifluormethyl-phenoxy)-difluor-methyl]-2,3',5'-trifluor-biphenyl-4-yl}-5-heptyl-tetrahydropyran

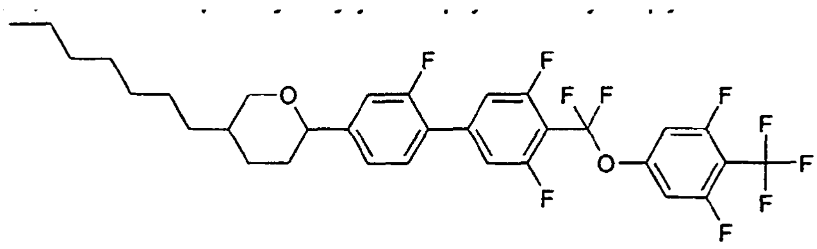

Die erfindungsgemäße Verbindung wird analog zu Beispiel 2 durch *Suzuki*-Kupplung von 2-[3-Fluor-4-(4,4,5,5-tetramethyl-[1,3,2]dioxaborolan-2-yl)-phenyl]-5-heptyl-tetrahydropyran phenyl]-5-heptyl-tetrahydropyran mit 5-((4-Brom-2,6-difluorphenyl)-difluormethoxy)-1,3-difluor-2-(trifluoromethyl)benzol hergestellt.

2-{4'-[(3,5-Difluor-4-trifluormethyl-phenoxy)-difluor-methyl]-2,3',5'-trifluor-biphenyl-4-yl}-5-heptyl-tetrahydropyran wird als farbloser Feststoff mit einem Schmp. von 68 °C erhalten. Die erfolgreiche Synthese wird NMRspektroskopisch ($^1H$, $^{19}F$, $^{13}C$) und massenspektroskopisch (EI) einwandfrei belegt.

<u>Physikalische Daten</u>

| Verbindung | Beispiel 5 |
|---|---|
| Struktur | 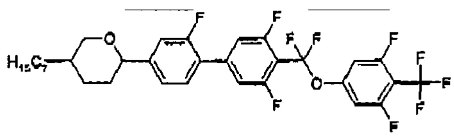 |
| Phase | K 68 N 93 I |
| Klp. / °C | 78 |
| Δε | 34,6 |
| Δn | 0,1314 |
| Δε· Δn | 4,69 |
| Löslichkeit in ZLI-4792 | 10% |

Die Verbindung gemäß Beispiel 5 hat einen hohen extrapolierten Klärpunkt und eine günstige Kombination aus Δε und Δn. Die Verbindung hat eine nematische Phase und ist gut löslich in nematischen Medien.

<u>Beispiel 6, 7 und 8:</u> Entfällt

<u>Beispiel 9:</u> 4-[(3,5-Difluor-4-trifluormethyl-phenoxy)-difluor-methyl]-3,5,2'-trifluor-4"-propyl-[1,1';4',1"]terphenyl

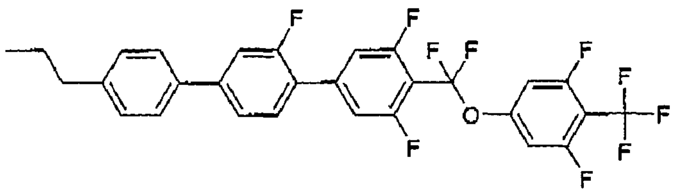

Die erfindungsgemäße Verbindung 4-[(3,5-Difluor-4-trifluormethylphenoxy)-difluor-methyl]-3,5,2'-trifluor-4"-propyl-[1,1';4',1"]terphenyl wird hergestellt wie nachfolgend beschrieben.

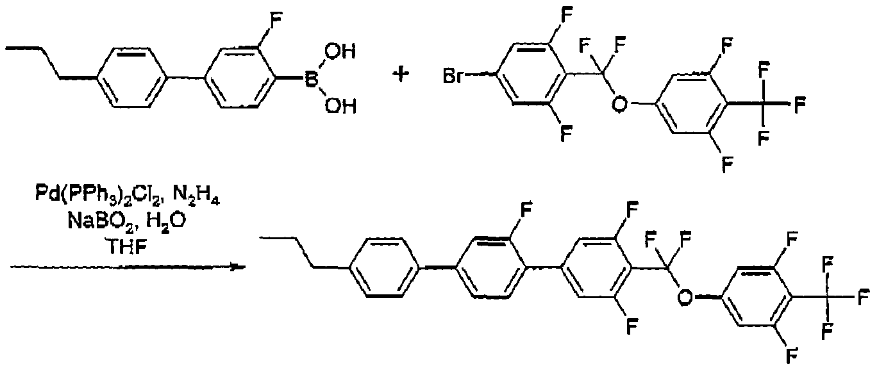


Eine Mischung aus 10,3 g (23,4 mmol) 5-((4-Brom-2,6-difluorphenyl)difluormethoxy)-1,3-difiluor-2-(trifluoromethyl)benzol, 12 ml (18 mmol) 1,5 N wässrige Natriummetaboratlsg. und 0,62 g (0,88 mmol) Bis(triphenylphosphin) palladium(II)-chlorid in 150 ml THF wird bei Raumtemperatur mit 0,11 ml (2,33 mmol) Hydrazinhydroxid versetzt. 6,0 g (23,2 mmol) 3-Fluor-4'-propyl-biphen-4-ylboronsäure werden zugegeben, und die Mischung wird 19 h zum Sieden erhitzt. Nach dem Abkühlen wird Wasser zugegeben, und der Ansatz wird mit MTBE extrahiert. Die wässrige Phase wird mit MTBE extrahiert, und die vereinigten organischen Phasen werden mit Wasser und gesättigter Natriumchloridlösung gewaschen. Die Lösung wird mit Natriumsulfat getrocknet und vollständig konzentriert. Das Rohprodukt wird säulenchromatographisch ($SiO_2$, *n*-Heptan : 1-Chlorbutan = 9 : 1) gereinigt. Die weitere Reinigung erfolgt durch Umkristallisation aus Ethanol und *n*-Heptan. 4-[(3,5-Difluor-4-trifluormethyl-phenoxy)-difluor-methyl]-3,5,2'-trifluor-4"-propyl-[1,1';4',1"]terphenyl wird als farbloser Feststoff mit einem Schmp. von 128°C erhalten.

**$^1$H-NMR** (400 MHz, $CHCl_3$): $\delta$ = 7,54 (d, 2H, J = 8,3 Hz, $H_{arom}$.), 7,50-7,48 (m, 2H, $H_{arom.}$), 7,43 (dm, 1H, J = 12,9 Hz, $H_{arom.}$), 7,32-7,25 (m, 4H, $H_{arom.}$), 7,00 (d, 2H, J = 9,9 Hz, $H_{arom.}$), 2,65 (t, 2H, J = 7,8 Hz, $H_{benzyl.}$), 1,74-1,65 (m, 2H, $H_{aliphat.}$), 0,98 (t, 3H, J = 7,3 Hz, $H_{aliphat.}$).

**$^{19}$F-NMR** (376 MHz, $CHCl_3$): $\delta$ = -56,8 (t, 3F, J = 22,0 Hz, $-CF_3$), -62,2 (t, 2F, J = 26,0 Hz, $-OCF_2-$), -108,7 bis -108,9 (m, 2F, $F_{arom.}$), -111,0 bis - 111,2 (m, 2F, $F_{arom.}$), -117,3 bis -117,4 (m, 1 F, $F_{arom.}$),

**MS (EI):** m/z(%) = 572 (33, $M^+$), 375 (100).

Physikalische Daten

| Verbindung | Beispiel 9 |
|---|---|
| Struktur | 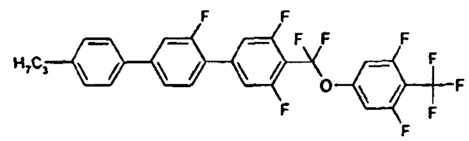 |
| Phase | K 128 N (120,7) I |
| Klp. / °C | 89 |
| $\Delta\varepsilon$ | 39,2 |
| $\Delta n$ | 0,2029 |
| $\Delta\varepsilon \cdot \Delta n$ | 7,95 |
| Löslichkeit in ZLI-4792 | 5% |

Die Verbindung gemäß Beispiel 9 hat einen hohen Klärpunkt und eine gute Kombination aus $\Delta\varepsilon$ und $\Delta n$. Sie zeichnet sich besonders durch das hohe $\Delta n$ aus.

Beispiel 10: 4-[(3,5-Difluor-4-trifluormethyl-phenoxy)-difluor-methyl]-3,5,2'-trifluor-4"-pentyl-[1,1';4',1 "]terphenyl

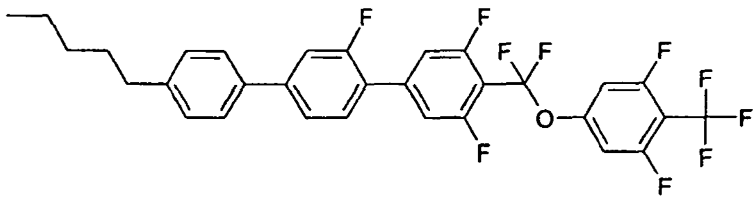

Die erfindungsgemäße Verbindung wird analog zu Beispiel 9 unter Verwendung von 3-Fluoro-4'-pentyl-biphen-4-ylboronsäure als Ausgangsmaterial hergestellt.

4-[(3,5-Difluor-4-trifluormethyl-phenoxy)-difluor-methyl]-3,5,2'-trifluor-4"-pentyl-[1,1';4',1"]terphenyl wird als farbloser Feststoff mit einem Schmp. von 96 °C erhalten.

**$^1$H-NMR** (300 MHz, $CHCl_3$): $\delta$ = 7,54 (d, 2H, J = 8,3 Hz, $H_{arom.}$), 7,50-7,48 (m, 2H, $H_{arom.}$), 7,43 (dm, 1H, J = 12,9 Hz, $H_{arom.}$), 7,32-7,25 (m, 4H, $H_{arom.}$), 7,00 (d, 2H, J = 9,9 Hz, $H_{arom.}$), 2,67 (t, 2H, J = 7,8 Hz, $H_{arom.}$), 1,73-1,61 (m, 2H, $H_{aliphat.}$), 1,41-1,31 (m, 4H, $H_{aliphat.}$), 0,91 (t, 3H, J = 6,8 Hz, $H_{aliphat.}$).

**$^{19}$F-NMR** (282 MHz, $CHCl_3$): $\delta$ = -56,3 (t, 3F, J = 22,0 Hz, $-CF_3$), -61,8 (t, 2F, J = 26,0 Hz, $-OCF_2-$), -108,1 bis -108,4 (m, 2F, $F_{arom.}$), -110,5 bis -110,7 (m, 2F, $F_{arom.}$), -116,7 bis -116,8 (m, 1F, $F_{arom.}$).

**MS (EI):** m/z(%) = 600 (30, $M^+$), 403 (100).

Physikalische Daten

| Verbindung | Beispiel 10 |
|---|---|
| Struktur | 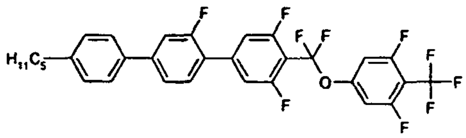 |
| Phase | K 96 N 115,5 I |
| Klp. / °C | 91 |
| $\Delta\varepsilon$ | 37,0 |
| $\Delta n$ | 0,1988 |
| $\Delta\varepsilon \cdot \Delta n$ | 7,36 |
| Löslichkeit in ZLI-4792 | 10% |

Die Verbindung gemäß Beispiel 10 hat einen hohen Klärpunkt und eine gute Kombination aus $\Delta\varepsilon$ und $\Delta n$. Die Verbindung hat eine nematische Phase und ist gut in nematischen Medien löslich.

**Mischungsbeispiele**

Die folgenden Akronyme werden verwendet, um die Komponenten der flüssigkristallinen Grundmischung (Host) zu beschreiben. Der Zähler n nimmt einen Wert von 1 bis 9 an. Die Verbindungen eignen sich für die Herstellung von erfindungsgemäßen flüssigkristallinen Medien. Tabelle A: Akronyme für LC-Komponenten

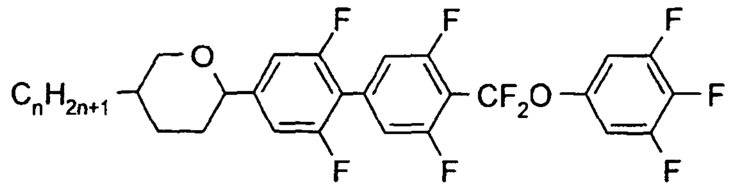

**AUUQU-n-F**

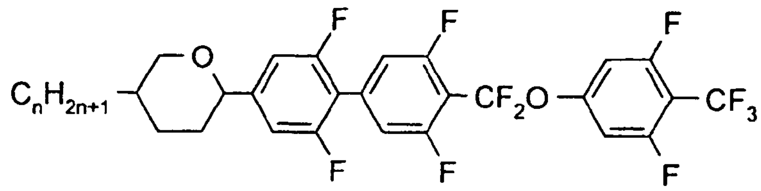

**AUUQU-n-T**

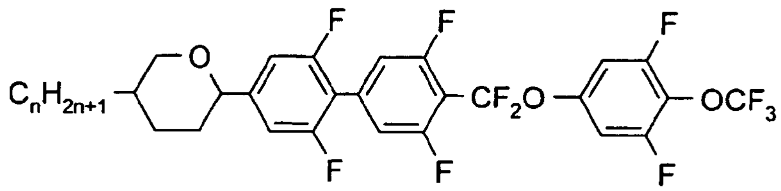

**AUUQU-n-OT**

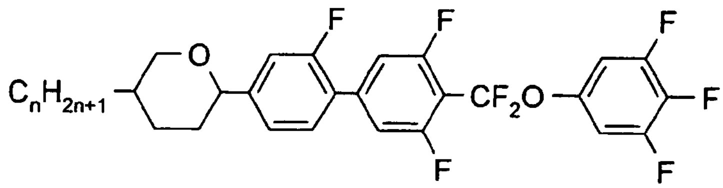

**AGUQU-n-F**

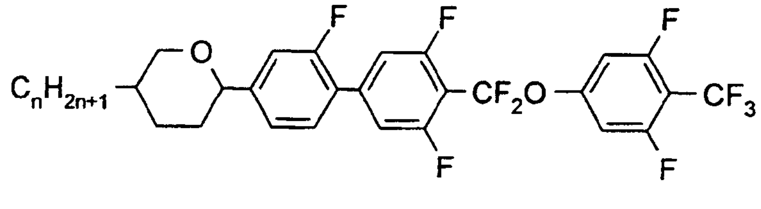

**AGUQU-n-T**

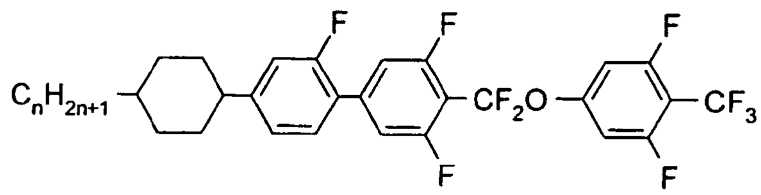

**CGUQU-n-T**

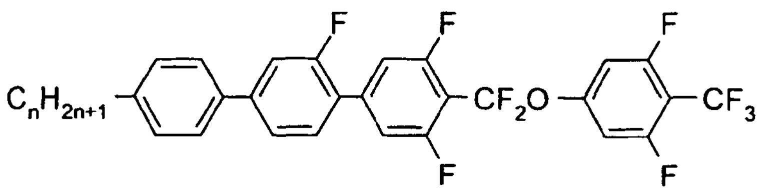

**PGUQU-n-T**

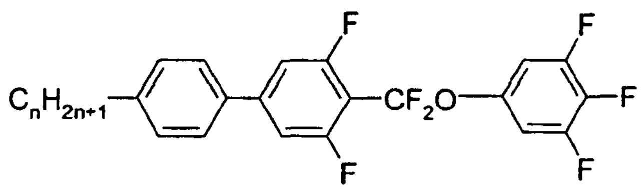

**PUQU-n-F**

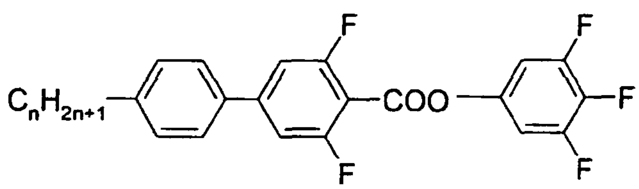

**PUZU-n-F**

Die folgenden Monomere werden vorzugsweise verwendet:

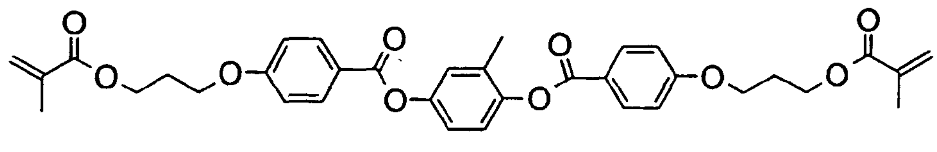

**RM220**

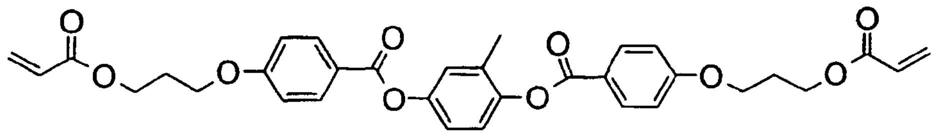

RM257

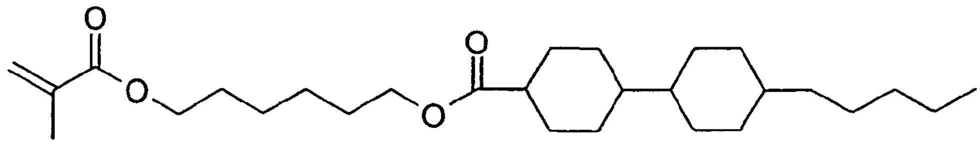

RM-2

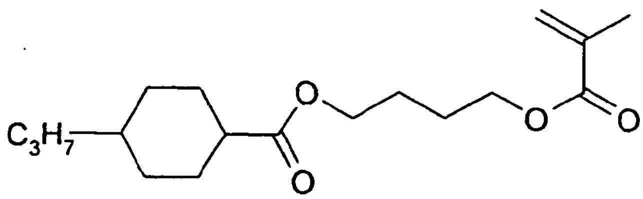

RM-3

RM220 hat die Phasensequenz K 82,5 N 97 I.
RM257 hat die Phasensequenz K 66 N 127 I.

Die folgenden Zusatzstoffe werden vorzugsweise verwendet (DP: chirales Dopant, IN: Polymerisationsinitiator):

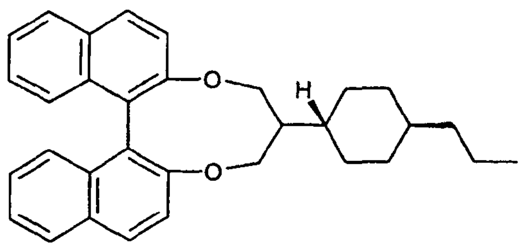

DP-1

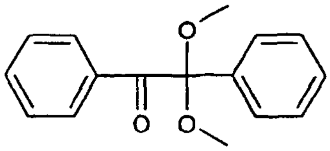

**IN-1** (Ciba ® Irgacure ® 651)

Weitere chirale Dopants und Polymerisationsinitiatoren für LC-Mischungen sind dem Fachmann bekannt und werden hier ausdrücklich erwähnt.

Die Medien werden vor der Polymerisation wie beschrieben charakterisiert. Darauf werden die RM-Komponenten durch einmalige Bestrahlung (180 s) in der blauen Phase polymerisiert, und die erhaltenen Medien werden erneut charakterisiert.

Beschreibung der Polymerisation

Vor der Polymerisation einer Probe werden die Phaseneigenschaften des Mediums in einer Testzelle von ca. 10 Mikrometer Dicke und einer Fläche von 2x2,5 cm festgestellt. Die Füllung erfolg durch Kapillarwirkung bei einer Temperatur von 75 °C. Die Messung des unpolymerisierten Mediums erfolgt unter einem Polarisationsmikroskop mit Heiztisch bei einem Temperaturverlauf von 1 °C/min.

Die Polymerisation der Medien wird durch Bestrahlung mit einer UV-Lampe (Hönle, Bluepoint 2.1, 365 nm Interferenzfilter) mit einer effektiven Leistung von ca. 1,5 $mW/cm^2$ für 180 Sekunden durchgeführt. Die Polymerisation erfolgt direkt in der elektrooptischen Testzelle. Die Polymerisation erfolgt anfangs bei einer Temperatur, in der das Medium in der blauen Phase I (BP-I) vorliegt. Die Polymerisation erfolgt in in mehreren Teilschritten, die nach und nach zu einer vollständigen Polymerisation führen. Der Temperaturbereich der blauen Phase ändert sich in der Regel während der Polymerisation. Zwischen jedem Teilschritt wird daher die Temperatur so angepasst, dass das Medium nach wie vor in der blauen Phase vorliegt. In der Praxis kann dies so erfolgen, dass nach jedem Bestrahlungsvorgang von ca. 5 s oder länger die Probe unter dem Polarisationsmikroskop beobachtet wird. Wird die Probe dunkler, so deutet dies auf einen Übergang in die isotrope Phase hin. Die Temperatur für den nächsten Teilschritt wird entsprechend verringert. Die gesamte Bestrahlungszeit, die zu der maximalen Stabilisierung führt, beträgt typischerweise 180 s bei der angegebenen Bestrahlungsleistung. Weitere Polymerisationen können nach einem optimierten Bestrahlungs-Temperatur-Programm durchgeführt werden. Alternativ kann die Polymerisation auch in einem einzigen Bestrahlungsschritt durchgeführt werden, insbesondere dann, wenn schon vor der Polymerisation eine breite blaue Phase vorliegt.

Elektrooptische Charakterisierung

Nach der oben beschriebenen Polymerisation und Stabilisierung der blauen Phase wird die Phasenbreite der blauen Phase bestimmt. Die elektrooptische Charakterisierung erfolgt anschließend bei verschiedenen Temperaturen innerhalb und ggf. auch außerhalb dieses Bereichs.

Die verwendeten Testzellen sind auf einer Seite mit Interdigitalelektroden auf der Zellenoberfläche ausgestattet. Der Zellspalt, der Elektrodenabstand und die Elektrodenbreite betragen typischerweise jeweils 1 bis 10 Mikrometer. Dieses einheitliche Maß wird nachfolgend als Spaltbreite bezeichnet. Die mit Elektroden belegte Fläche beträgt ca. 0,4 $cm^2$. Die Testzellen besitzen keine Orientierungsschicht ('alignment layer'). Die Zelle befindet sich für die elektrooptische Charakterisierung zwischen gekreuzten Polarisationsfiltern, wobei die Längsrichtung der Elektroden einen Winkel von 45° mit den Achsen des Polarisationsfilters einnimmt. Die Messung erfolgt mit einem DMS301 (Autronic-Melchers) im rechten Winkel zur Zellebene oder mittels einer hochempfindlichen Kamera am Polarisationsmikroskop. Im spannungslosen Zustand ergibt die beschriebene Anordnung ein im Wesentlichen dunkles Bild (Definition 0 % Transmission).

Zuerst werden die charakteristischen Betriebsspannungen und dann die Schaltzeiten an der Testzelle gemessen. Die Betriebsspannung an den Zellelektroden wird in Form von Rechteckspannung mit alternierendem Vorzeichen (Frequenz 100 Hz) und variabler Amplitude wie im Folgenden beschrieben angelegt.

Die Transmission im spannungslosen Zustand wird als 0 % festgelegt. Während die Betriebspannung erhöht wird, wird die Transmission gemessen. Das Erreichen des Maximalwerts von ca. 100 % Intensität legt die charakteristische Größe der Betriebsspannung $V_{100}$ fest. Gleichermaßen wird die charakteristische Spannung $V_{10}$ bei 10 % der maximalen Transmission bestimmt. Diese Werte werden optional bei verschiedenen Temperaturen im Bereich der blauen Phase gemessen, jedenfalls bei Raumtemperatur (20°C).

Am unteren Ende des Temperaturbereichs der blauen Phase werden relativ hohe charakteristische Betriebsspannungen $V_{100}$ beobachtet. Am oberen Ende des Temperaturbereichs (Nähe zum Klärpunkt) steigt der Wert von $V_{100}$ stark an. Im Bereich der minimalen Betriebsspannung steigt $V_{100}$ in der Regel nur langsam mit der Temperatur. Dieser Temperaturbereich, begrenzt durch $T_1$ und $T_2$ wird als nutzbarer, flacher Temperaturbereich (FB) bezeichnet. Die Breite dieses "Flachbereichs"

(FB) beträgt ($T_2$ - $T_1$) und wird als Breite des Flachbereichs (BFB) (engl. 'flat range') bezeichnet. Die genauen Werte von $T_1$ und $T_2$ werden durch die Schnittpunkte von Tangenten an den flachen Kurvenabschnitt FB und die benachbarten steilen Kurvenabschnitte im $V_{100}$-Temperatur-Diagramm ermittelt.

Im zweiten Teil der Messung werden die Schaltzeiten beim Ein- und Ausschalten ermittelt ($\tau_{on}$, $\tau_{off}$). Die Schaltzeit $\tau_{on}$ ist definiert durch die Zeit bis zum Erreichen von 90 % Intensität nach dem Anlegen einer Spannung der Höhe von $V_{100}$ bei der gewählten Temperatur. Die Schaltzeit $\tau_{off}$ ist definiert durch die Zeit bis zur Abnahme um 90 % ausgehend von

maximaler Intensität bei $V_{100}$ nach dem Erniedrigen der Spannung auf 0 V. Auch die Schaltzeit wird bei verschiedenen Temperaturen im Bereich der blauen Phase ermittelt.

Als weitere Charakterisierung kann bei einer Temperatur innerhalb FB die Transmission bei kontinuierlich veränderter Betriebsspannung zwischen 0 V und $V_{100}$ gemessen werden. Bei Vergleich der Kurven für zunehmende und für abnehmende Betriebsspannung kann eine Hysterese auftreten. Die Differenz der Transmissionen bei 0,5 $V_{100}$ bzw. die Differenz der Spannungen bei 50 % Transmission sind beispielsweise charakteristische Hysteresewerte und werden als $\Delta T_{50}$ respektive $\Delta V_{50}$ bezeichnet. Als weitere Kenngröße kann das Verhältnis der Transmission im spannungslosen Zustand vor und nach Durchlaufen eines Schaltzyklusses gemessen werden. Dieses Transmissionsverhältnis wird als "Memory-Effekt" bezeichnet. Der Wert des Memory-Effekts liegt im Idealzustand bei 1,0. Werte über 1 bedeuten, dass ein gewisser Memory-Effekt in Form einer zu hohen Resttransmission nach dem Ein- und Ausschalten der Zelle vorliegt. Auch dieser Wert wird im Arbeitsbereich der blauen Phase (FB) ermittelt.

Die Messwerte, soweit nicht anders angegeben, werden bei 20 °C ermittelt.

**Mischungsbeispiel 1** (Hostmischung)

| Komponente | Gew. % |
|---|---:|
| PUQU-3-F | 5 |
| AUUQU-2-F | 6 |
| AUUQU-3-F | 10 |
| AUUQU-4-F | 6 |
| AUUQU-5-F | 9 |
| AUUQU-7-F | 6 |
| AUUQU-3-T | 6 |
| AUUQU-4-T | 6 |
| AUUQU-5-T | 8 |
| PUZU-2-F | 6 |
| PUZU-3-F | 10 |
| PUZU-5-F | 9 |
| AGUQU-3-T | 13 |
| $\Delta\varepsilon$: 153,<br>$\Delta$ n: 0,147 | |

**Mischungsbeispiel 2** (Hostmischung)

| Komponente | Gew. % |
|---|---:|
| PUQU-3-F | 5 |
| AUUQU-2-F | 12 |
| AUUQU-3-F | 15 |
| AUUQU-4-F | 8 |
| AUUQU-5-F | 12 |
| AUUQU-7-F | 10 |
| PUZU-2-F | 6 |
| PUZU-3-F | 10 |

(fortgesetzt)

| Komponente | Gew. % |
|---|---|
| PUZU-5-F | 9 |
| AGUQU-3-T | 13 |

Δε :140, Δn:0,144.

**Mischungsbeispiel 3**

Eine typische polymerstabilisierbare Mischung setzt sich zusammen gemäß der Tabelle:

| Komponente | Gew. % |
|---|---|
| Hostmischung | 85 |
| IN-1 | 0,2 |
| monoreaktives Mesogen (RM-2 / RM-3) | 5 |
| direaktives Mesogen (RM220 / RM257) | 6 |
| chirales Dopant DP-1 | 3,8 |

Die polymerisierbare Mischung wird bei einer Temperatur von ca. 30-50 °C am unteren Ende des Bereichs der blauen Phase in einem einzigen Bestrahlungsschritt polymerisiert (Details vgl. oben). Die polymerstabilisierten flüssigkristallinen Medien zeigen über einen breiten Temperaturbereich eine blaue Phase.

Weitere Kombinationen der Ausführungsformen und Varianten der Erfindung gemäß der Beschreibung ergeben sich auch aus den folgenden Ansprüchen.

**Patentansprüche**

1. Verbindungen der Formel I

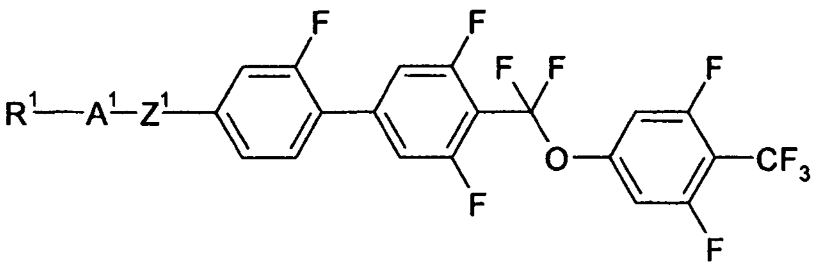

I

worin

$A^1$

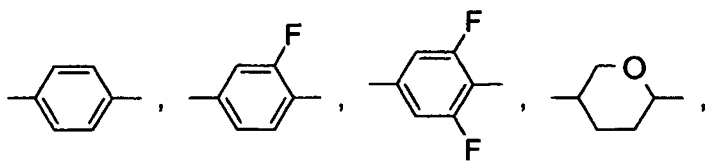

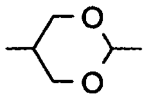 , 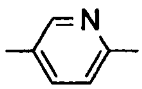 , 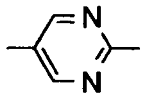 , 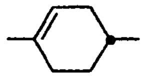 ,

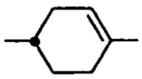 , 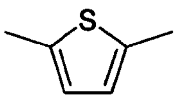 oder 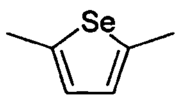 ,

**$Z^1$** eine Einfachbindung, $CF_2O$, $CH_2CH_2$, $CF_2CH_2$, $CF_2CF_2$, CFHCFH, $CFHCH_2$, (CO)O, $CH_2O$, C≡C, CH=CH, CF=CH, CF=CF; unsymmetrische Bindeglieder können in beide möglichen Richtungen orientiert sein, und

$R^1$ einen unsubstituierten Alkylrest mit 1 bis 15 C-Atomen, wobei in diesem Rest auch eine oder mehrere $CH_2$-Gruppen jeweils unabhängig voneinander durch -C≡C-, -CH=CH-, -CF=CF-, -CF=CH-, -CH=CF-, -(CO)O-, -O(CO)-, -(CO)- oder -O- so ersetzt sein können, dass O-Atome nicht direkt miteinander verknüpft sind, H, F, Cl, Br, CN, $CF_3$, $OCF_3$, SCN, NCS oder $SF_5$,

bedeuten.

2. Verbindungen nach Anspruch 1, **dadurch gekennzeichnet, dass** $Z^1$ eine Einfachbindung bedeutet.

3. Verbindungen nach Anspruch 1 oder 2, **dadurch gekennzeichnet, dass** der Ring

$A^1$

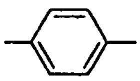 , 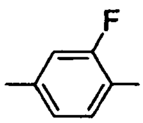 , 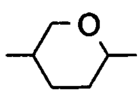 , 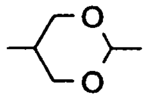 , 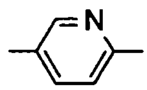

oder

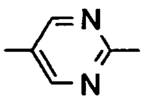

bedeutet.

4. Verbindungen nach einem oder mehreren der Ansprüche 1 bis 3 der Formeln

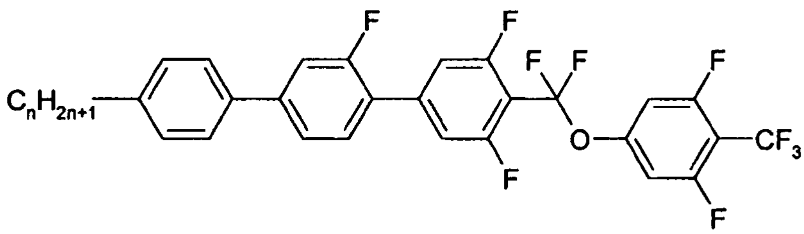

oder

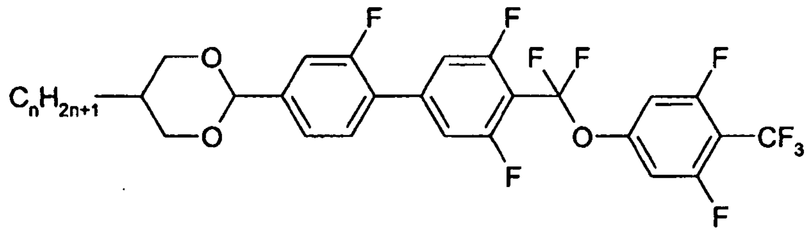

worin n = 1, 2, 3, 4, 5, 6 oder 7 ist.

**5.** Verbindungen nach einem oder mehreren der Ansprüche 1 bis 4, **dadurch gekennzeichnet, dass**

$R^1$ einen Alkylrest mit 1 bis 15 C-Atomen, wobei in diesem Rest auch eine oder mehrere $CH_2$-Gruppen jeweils unabhängig voneinander durch -C≡C-, -CH=CH-, -(CO)O-, -O(CO)-, -(CO)- oder -O- so ersetzt sein können, dass O-Atome nicht direkt miteinander verknüpft sind,

bedeutet.

**6.** Verbindungen nach einem oder mehreren der Ansprüche 1 bis 5, **dadurch gekennzeichnet, dass**

$R^1$ einen geradkettigen Alkylrest mit 1 bis 12 C-Atomen bedeutet.

**7.** Verbindungen nach einem oder mehreren der Ansprüche 1 bis 6, **dadurch gekennzeichnet, dass**

$R^1$ einen geradkettigen Alkylrest mit 3 C-Atomen bedeutet.

**8.** Verfahren zur Herstellung von Verbindungen der Formel I nach einem oder mehreren der Ansprüche 1 bis 7 umfassend einen Reaktionsschritt wobei zwei Edukte der Formeln A und B:

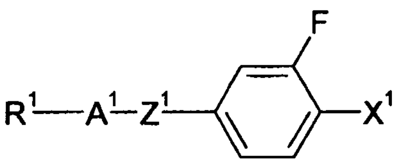

A

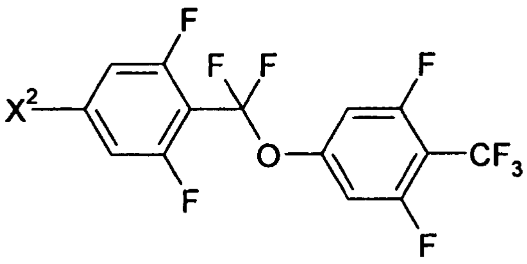

B

worin $R^1$, $A^1$ und $Z^1$ wie für Formel I definiert sind, und
$X^1$ oder $X^2$ -$B(OH)_2$, einen Boronsäureester oder ein Boronatsalz und der andere Rest Cl, Br, I oder -$O(SO_2)CF_3$ bedeuten,
in Gegenwart eines geeigneten Übergangsmetallkatalysators umgesetzt werden.

**9.** Flüssigkristallines Medium, **dadurch gekennzeichnet, dass** es eine oder mehrere Verbindungen der Formel I nach einem oder mehreren der Ansprüche 1 bis 7 enthält.

**10.** Flüssigkristallines Medium nach Anspruch 9, **dadurch gekennzeichnet, dass** es zusätzlich eine oder mehrere Verbindungen ausgewählt aus den Verbindungen der Formel II und III enthält:

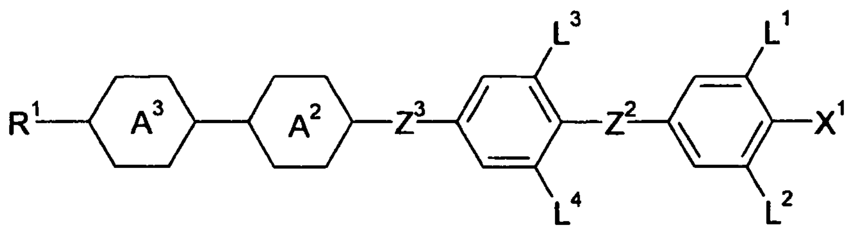

II

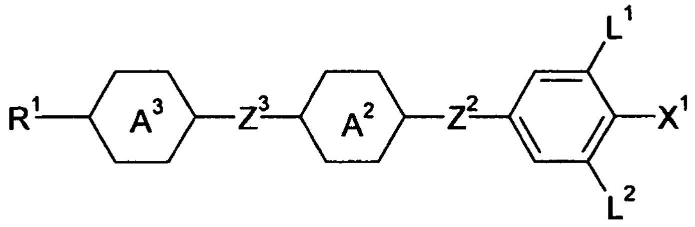

III

worin

$R^1$ unabhängig voneinander einen unsubstituierten Alkylrest mit 1 bis 15 C-Atomen, wobei in diesem Rest auch eine oder mehrere $CH_2$-Gruppen jeweils unabhängig voneinander durch -C≡C-, -CH=CH-, -CF=CF-, -CF=CH-, -CH=CF-, -(CO)O-, -O(CO)-, -(CO)- oder -O- so ersetzt sein können, dass O-Atome nicht direkt miteinander verknüpft sind,

$A^2$, $A^3$ unabhängig voneinander

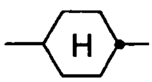, 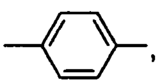, 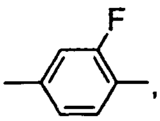, 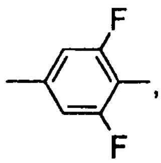,

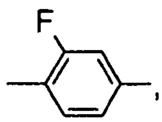, 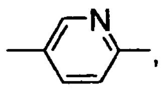, 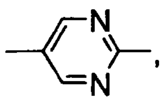, 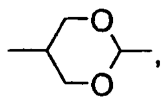,

$Z^2$, $Z^3$ unabhängig voneinander eine Einfachbindung, $CF_2O$, $CH_2CH_2$, $CF_2CH_2$, $CF_2CF_2$, CFHCFH, $CFHCH_2$, (CO)O, $CH_2O$, C≡C, CH=CH, CF=CH, CF=CF; wobei unsymmetrische Bindeglieder in beide möglichen Richtungen orientiert sein können,

$X^1$ F, Cl, CN, oder Alkyl, Alkenyl, Alkenyloxy, Alkoxyalkyl oder Alkoxy mit 1 bis 3 C-Atomen, welches durch F ein- oder mehrfach substituiert ist, und

$L^1$ bis $L^4$ H oder F,

bedeuten.

**11.** Verwendung der Verbindungen der Formel I nach einem oder mehreren der Ansprüche 1 bis 7 in einem flüssigkristallinen Medium oder in einer elektrooptischen Anzeige.

**12.** Elektrooptische Anzeigevorrichtung enthaltend ein flüssigkristallines Medium nach Anspruch 9 oder 10.

**13.** Elektrooptische Anzeigevorrichtung nach Anspruch 12, **dadurch gekennzeichnet, dass** sie ganz oder teilweise im Bereich der flüssigkristallinen blauen Phase arbeitet.

## Claims

**1.** Compounds of the formula I

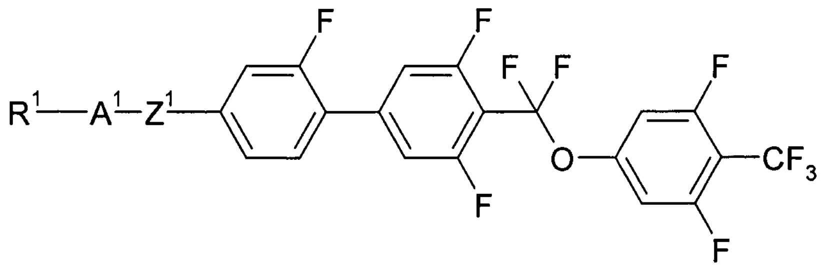

I

in which

$A^1$ denotes

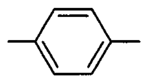 , 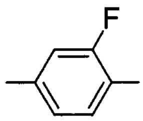 , 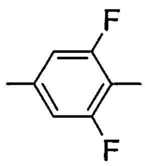 ,

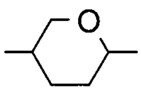 , 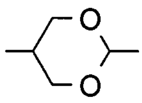 , 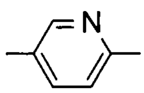 , 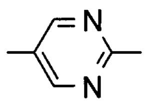 ,

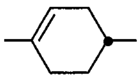 , 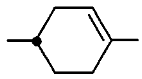 , 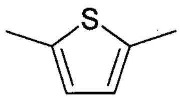 or 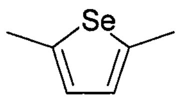 ,

$Z^1$ denotes a single bond, $CF_2O$, $CH_2CH_2$, $CF_2CH_2$, $CF_2CF_2$, CFHCFH, $CFHCH_2$, (CO)O, $CH_2O$, C=C, CH=CH, CF=CH, CF=CF; where asymmetrical bonding units may be oriented in both possible directions, and

$R^1$ denotes an unsubstituted alkyl radical having 1 to 15 C atoms, where, in addition, one or more $CH_2$ groups in this radical may each be replaced, independently of one another, by -C≡C-, -CH=CH-, -CF=CF-, -CF=CH-, -CH=CF-, -(CO)O-, -O(CO)-, -(CO)- or -O- in such a way that O atoms are not linked directly to one another, H, F, Cl, Br, CN, $CF_3$, $OCF_3$, SCN, NCS or $SF_5$.

**2.** Compounds according to Claim 1, **characterised in that** $Z^1$ denotes a single bond.

**3.** Compounds according to Claim 1 or 2, **characterised in that** ring

$A^1$ denotes

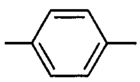 , 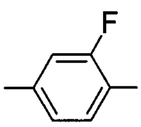 , 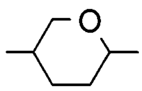 , 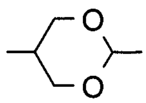 ,

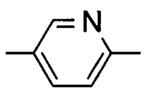 or 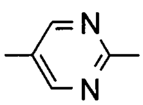 .

**4.** Compounds according to one or more of Claims 1 to 3 of the formula

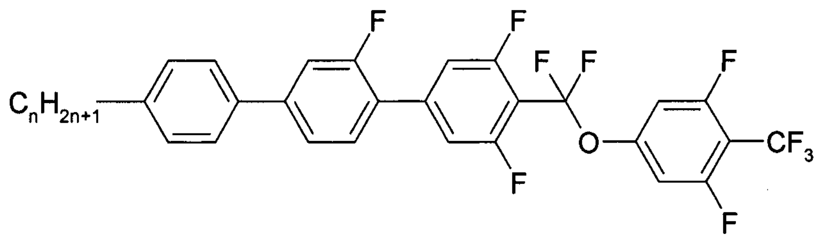

or

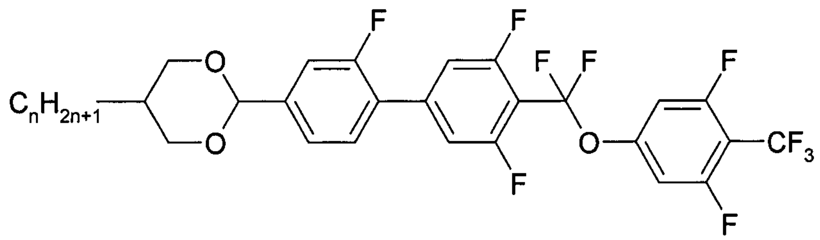

in which n = 1, 2, 3, 4, 5, 6 or 7.

5. Compounds according to one or more of Claims 1 to 4, **characterised in that**

$R^1$ denotes an alkyl radical having 1 to 15 C atoms, where, in addition, one or more $CH_2$ groups in this radical may each be replaced, independently of one another, by -C≡C-, -CH=CH-, -(CO)O-, -O(CO)-, -(CO)- or -O- in such a way that O atoms are not linked directly to one another.

6. Compounds according to one or more of Claims 1 to 5, **characterised in that**

$R^1$ denotes a straight-chain alkyl radical having 1 to 12 C atoms.

7. Compounds according to one or more of Claims 1 to 6, **characterised in that**

$R^1$ denotes a straight-chain alkyl radical having 3 C atoms.

8. Process for the preparation of compounds of the formula I according to one or more of Claims 1 to 7 comprising a reaction step in which two starting materials of the formulae A and B:

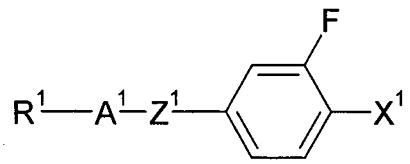

A

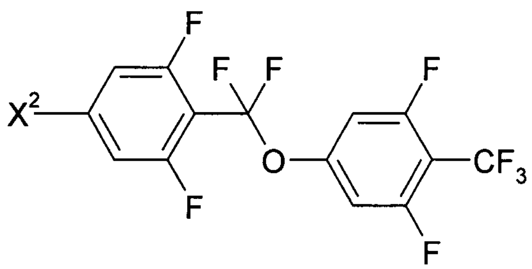

B

in which $R^1$, $A^1$ and $Z^1$ are as defined for formula I, and

$X^1$ or $X^2$ denotes $-B(OH)_2$, a boronic acid ester or a boronate salt

and the other radical denotes Cl, Br, I or $-O(SO_2)CF_3$, are reacted in the presence of a suitable transition-metal catalyst.

**9.** Liquid-crystalline medium, **characterised in that** it comprises one or more compounds of the formula I according to one or more of Claims 1 to 7.

**10.** Liquid-crystalline medium according to Claim 9, **characterised in that** it additionally comprises one or more compounds selected from the compounds of the formulae II and III:

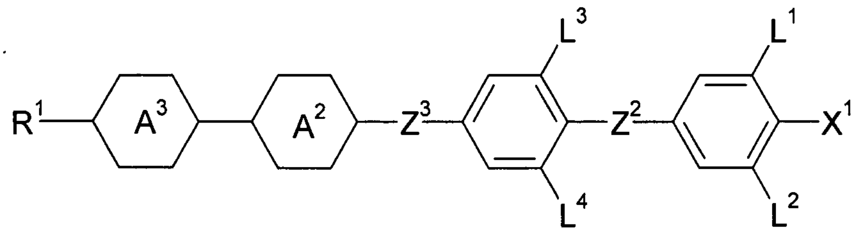

II

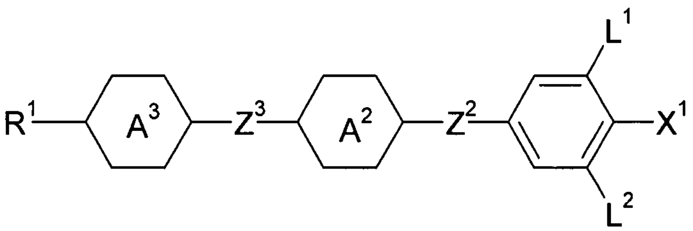

III

in which

$R^1$, independently of one another, denotes an unsubstituted alkyl radical having 1 to 15 C atoms, where, in addition, one or more $CH_2$ groups in this radical may each be replaced, independently of one another, by -C≡C-, -CH=CH-, -CF=CF-, -CF=CH-, -CH=CF-, -(CO)O-, -O(CO)-, -(CO)- or -O- in such a way that O atoms are not linked directly to one another,
$A^2$, $A^3$, independently of one another, denote

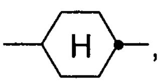 , 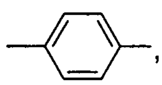 , 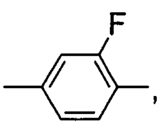 , 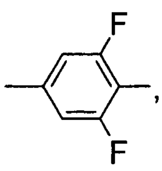 ,

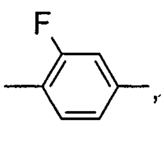 , 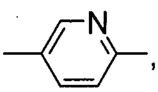 , 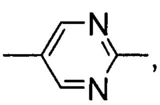 , 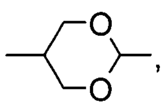 ,

$Z^2$, $Z^3$, independently of one another, denote a single bond, $CF_2O$, $CH_2CH_2$, $CF_2CH_2$, $CF_2CF_2$, CFHCFH, $CFHCH_2$, (CO)O, $CH_2O$, C=C, CH=CH, CF=CH, CF=CF; where asymmetrical bonding units may be oriented in both possible directions,
$X^1$ denotes F, Cl, CN, or alkyl, alkenyl, alkenyloxy, alkoxyalkyl or alkoxy having 1 to 3 C atoms, which is mono- or polysubstituted by F, and
$L^1$ to $L^4$ denote H or F.

**11.** Use of the compounds of the formula I according to one or more of Claims 1 to 7 in a liquid-crystalline medium or in an electro-optical display.

**12.** Electro-optical display device containing a liquid-crystalline medium according to Claim 9 or 10.

**13.** Electro-optical display device according to Claim 12, **characterised in that** it operates entirely or partly in the region of the liquid-crystalline blue phase.

## Revendications

**1.** Composés de la formule I

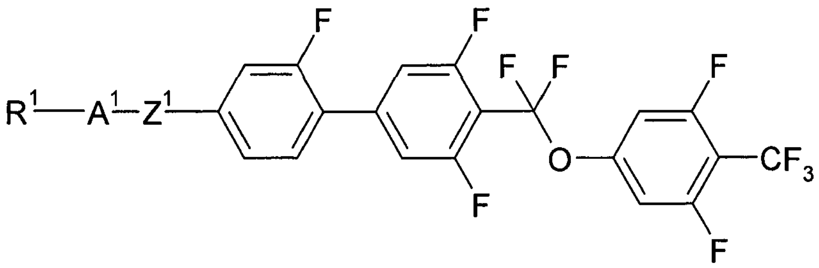

I

dans laquelle

$A^1$ représente

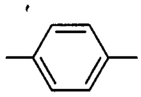 , 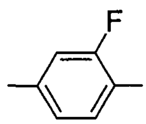 , 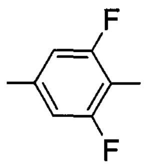 ,

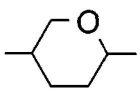 , 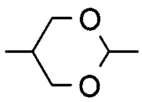 , 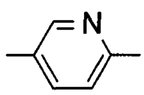 , 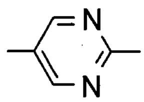 ,

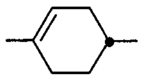 , 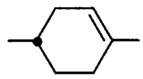 , 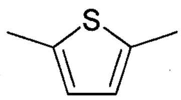

ou

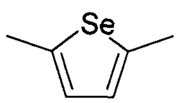 ,

$Z^1$ représente une liaison simple, $CF_2O$, $CH_2CH_2$, $CF_2CH_2$, $CF_2CF_2$, CFHCFH, $CFHCH_2$, (CO)O, $CH_2O$, C=C, CH=CH, CF=CH, CF=CF ; où des unités de liaison asymétriques peuvent être orientées dans les deux directions possibles, et
$R^1$ représente un radical alkyle non substitué comportant de 1 à 15 atomes de C, où, en outre, un ou plusieurs groupes $CH_2$ dans ce radical peuvent chacun être remplacés, indépendamment les uns des autres, par -C≡C-, -CH=CH-, -CF=CF-, -CF=CH-, -CH=CF-, -(CO)O-,- O(CO)-, -(CO)- ou -O- de telle sorte que des atomes de O ne soient pas liés directement les uns aux autres, H, F, Cl, Br, CN, $CF_3$, $OCF_3$, SCN, NCS ou $SF_5$.

**2.** Composés selon la revendication 1, **caractérisés en ce que** $Z^1$ représente une liaison simple.

**3.** Composés selon la revendication 1 ou 2, **caractérisés en ce qu'**un cycle

$A^1$ représente

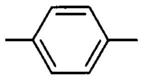 , 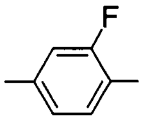 , 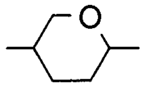 , 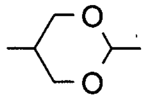 ,

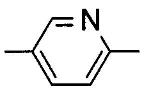 ou 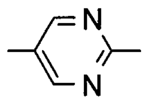 .

**4.** Composés selon une ou plusieurs des revendications 1 à 3 de la formule

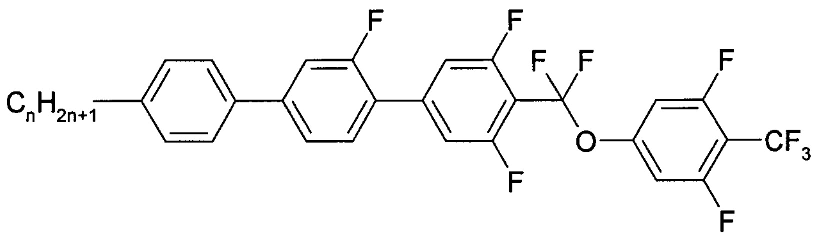

ou

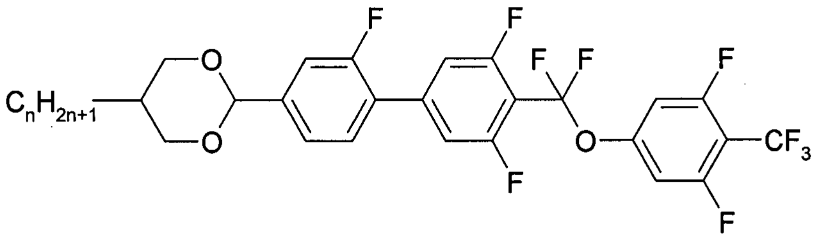

dans laquelle n = 1, 2, 3, 4, 5, 6 ou 7.

**5.** Composés selon une ou plusieurs des revendications 1 à 4, **caractérisés en ce que** :

$R^1$ représente un radical alkyle comportant de 1 à 15 atomes de C, où, en outre, un ou plusieurs groupes $CH_2$ dans ce radical peuvent chacun être remplacés, indépendamment les uns des autres, par -C≡C-, -CH=CH-, -(CO)O-, -O(CO)-, -(CO)- ou -Ode telle sorte que des atomes de O ne soient pas liés directement les uns aux autres.

**6.** Composés selon une ou plusieurs des revendications 1 à 5, **caractérisés en ce que** :

$R^1$ représente un radical alkyle en chaîne droite comportant de 1 à 12 atomes de C.

**7.** Composés selon une ou plusieurs des revendications 1 à 6, **caractérisés en ce que** :

$R^1$ représente un radical alkyle en chaîne droite comportant 3 atomes de C.

**8.** Procédé pour la préparation de composés de la formule I selon une ou plusieurs des revendications 1 à 7, comprenant une étape de réaction au niveau de laquelle deux matériaux de départ des formules A et B :

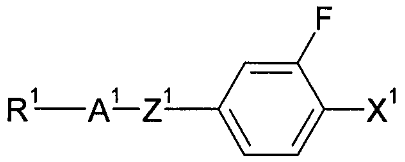

A

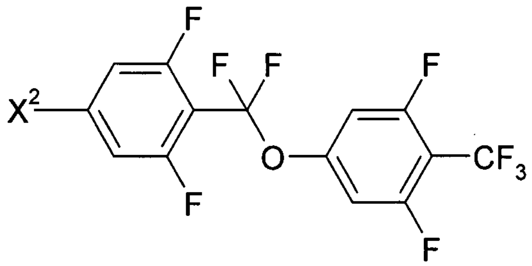

B

dans lesquelles $R^1$, $A^1$ et $Z^1$ sont comme défini pour la formule I, et
$X^1$ ou $X^2$ représente $-B(OH)_2$, un ester d'acide boronique ou un sel de boronate
et l'autre radical représente Cl, Br, I ou $-O(SO_2)CF_3$,
sont amenés à réagir en présence d'un catalyseur de métal de transition approprié.

9. Milieu cristallin liquide, **caractérisé en ce qu'**il comprend un ou plusieurs composés de la formule I selon une ou plusieurs des revendications 1 à 7.

10. Milieu cristallin liquide selon la revendication 9, **caractérisé en ce qu'**il comprend additionnellement un ou plusieurs composés choisis parmi les composés des formules II et III :

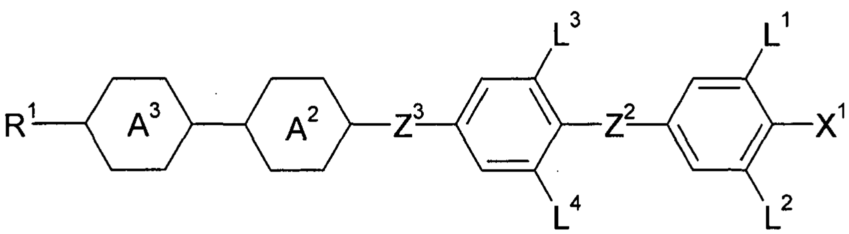

II

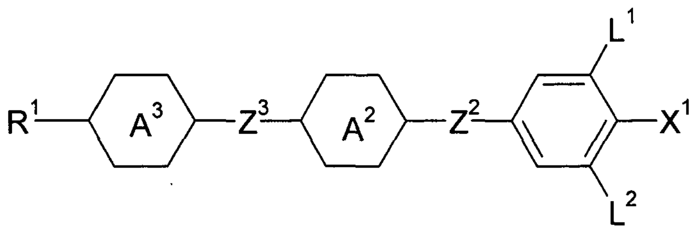

III

dans lesquelles

$R^1$ représente un radical alkyle non substitué comportant de 1 à 15 atomes de C, où, en outre, un ou plusieurs groupes $CH_2$ dans ce radical peuvent chacun être remplacés, indépendamment les uns des autres, par -C≡C-, -CH=CH-, -CF=CF-, -CF=CH-, -CH=CF-, -(CO)O-, -O(CO)-, -(CO)- ou -O- de telle sorte que des atomes de O ne soient pas liés directement les uns aux autres,
$A^2$, $A^3$ représentent, indépendamment l'un de l'autre,

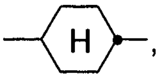, 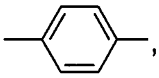, 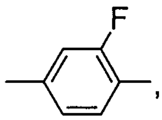, 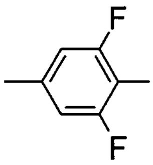,

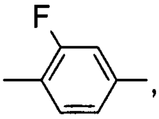, 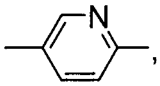, 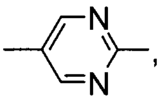, 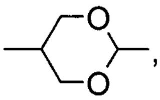,

$Z^2$, $Z^3$ représentent, indépendamment l'un de l'autre, une liaison simple, $CF_2O$, $CH_2CH_2$, $CF_2CH_2$, $CF_2CF_2$, CFHCFH, $CFHCH_2$, (CO)O, $CH_2O$, C≡C, CH=CH, CF=CH, CF=CF ; où des unités de liaison asymétriques peuvent être orientées dans les deux directions possibles,
$X^1$ représente F, Cl, CN, ou alkyle, alkényle, alkényloxy, alcoxyalkyle ou alcoxy comportant de 1 à 3 atomes de C, lequel est mono- ou polysubstitué par F, et
$L^1$ à $L^4$ représentent H ou F.

**11.** Utilisation des composés de la formule I selon une ou plusieurs des revendications 1 à 7 dans un milieu cristallin liquide ou dans un affichage électro-optique.

**12.** Dispositif d'affichage électro-optique contenant un milieu cristallin liquide selon la revendication 9 ou 10.

**13.** Dispositif d'affichage électro-optique selon la revendication 12, **caractérisé en ce qu'**il fonctionne entièrement ou partiellement dans la région de la phase bleue du cristal liquide.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10353658 A1
- EP 1454975 A2
- US 20090059157 A1
- WO 2008061606 A
- US 20060061699 A1
- DE 10353685 A1
- WO 2005017067 A1
- EP 1900792 A1
- EP 1908811 A1
- DE 102008024866 A1
- DE 10353658


### In der Beschreibung aufgeführte Nicht-Patentliteratur


- **H. KIKUCHI et al.** *Appl. Phys. Lett.,* 2008, vol. 92, 043119
- **P. KIRSCH ; M. BREMER ; A. TAUGERBECK ; T. WALLMICHRATH.** *Angew. Chem. Int. Ed.,* 2001, vol. 40, 1480-1484
- Merck Liquid Crystals, Physical Properties of Liquid Crystals. Merck KGaA, November 1997